# EUROPÄISCHE PATENTSCHRIFT

(11) **EP 3 402 847 B1**
(45) Veröffentlichungstag und Bekanntmachung des Hinweises auf die Patenterteilung: **19.08.2020**
(21) Anmeldenummer: 17706686.7
(22) Anmeldetag: 24.02.2017
(51) Int. Cl.: C09D 4/00, C08F 226/06

(54) **VERNETZBARE ZUSAMMENSETZUNG UND VERFAHREN ZUR HERSTELLUNG EINES BESCHICHTETEN ARTIKELS**
CROSSLINKABLE COMPOSITION AND METHOD FOR PRODUCING A COATED ARTICLE
COMPOSITION RÉTICULABLE ET PROCÉDÉ POUR PRODUIRE UN ARTICLE REVÊTU

(30) Priorität: 25.02.2016 EP 16157388
(43) Veröffentlichungstag der Anmeldung: 21.11.2018
(73) Patentinhaber: HWK Kronbichler GmbH, 6341 Ebbs (AT)
(72) Erfinder: NAIER, Benjamin, 0620 Innsbruck (AT); SCHOTTENBERGER, Herwig, 6082 Patsch (AT); DAXENBICHLER, Anna, 6020 Innsbruck (AT); BECHTOLD, Thomas, 6850 Dornbirn (AT); PARTL, Gabriel, 6020 Innsbruck (AT); ANDRE, Maximilian, 6215 Achenkirch (AT); KRONBICHLER, Simon, 6341 Ebbs (AT); KRONBICHLER, Reinhard, 6341 Ebbs (AT)
(74) Vertreter: Frick, Robert
(86) Internationale Anmeldenummer: PCT/EP2017/000261
(87) Internationale Veröffentlichungsnummer: WO 2017/144180

(56) Entgegenhaltungen:
- US-A- 4 366 300
- US-A- 5 131 674
- US-A1- 2005 287 111
- US-A1- 2009 286 976
- US-A1- 2012 101 184
- US-A1- 2012 149 800

## Beschreibung

Die Erfindung betrifft ein Verfahren zur Herstellung eines beschichteten Artikels unter Verwendung einer vernetzbaren bzw. polymerisierbaren Zusammensetzung umfassend funktionalisierte Monomere, die eine vernetzbare bzw. polymerisierbare Gruppe aufweisen. Die Erfindung betrifft ferner einen anhand dieses Verfahrens hergestellten, beschichteten Artikel.

Beschichtungen und Wachse mit sowohl hydrophoben als auch oleophoben Eigenschaften (amphiphoben Eigenschaften) sind für eine Vielzahl von Anwendungen von Interesse, unter anderem als schmutzabweisende (ggf. durch Grafting kovalent gebundene) Beschichtung oder Imprägnierung von Fasern, Geweben, Drähten und Textilien, als Anti-Graffiti Beschichtungen, als Anti-Fouling Beschichtungen, als Additiv in der Zahnmedizin, als Fluorotensid oder als Gleithilfe für Laufflächen von Wintersportgeräten wie beispielsweise Skiern. Oftmals enthalten derartige Beschichtungen oder Wachse fluorhaltige Monomere bzw. deren Vernetzungsprodukte.

Die US 4,366,300 A1 beschreibt ein polymerisierbares Skiwachs, welches ein polymerisierbares fluorhaltiges Monomer der folgenden Struktur aufweisen kann:

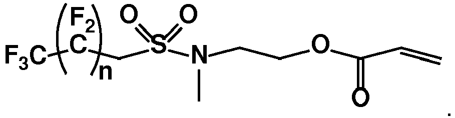

Die US 5,131,674 A1 beschreibt ein Skiwachs bestehend aus einem Alkohol mit einer Perfluoroalkylgruppe, einem Ester mit einer Perfluoroalkylgruppe und oder einem Perfluoroalkylesterpolymer von (Meth)acrylsäure. Die fluorhältigen Komponenten besitzen darin einen Schmelzpunkt von unter 100°C.

Die EP 0 890 579 A1 beschreibt ein Verfahren zur Derivatisierung von Cellulose mit fluorhaltigen Monomeren, was beispielsweise der Funktionalisierung von Textilien dienen kann.

Kationische polymerisierbare Fluorsysteme sind beispielsweise aus der Patentanmeldung US 2005/0287111 A1 bekannt. Dort wird der Einsatz derartiger Systeme für keimtötende Schiffslacke beschrieben. Unter anderem wird der Einsatz des folgenden Monomers vorgeschlagen:

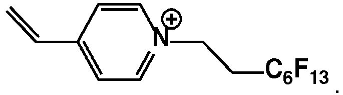

Kationische und geringfügig fluorierte Crosslinker-Systeme sind ebenfalls bekannt. Beispielsweise wird in der Offenlegungsschrift US 2010/0256242 A1 die Synthese eines Diacrylats für den Einsatz in der Zahnmedizin mit der folgenden Struktur beschrieben:

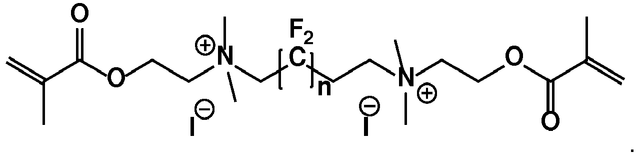

In der US 2009/0286976 A1 werden fluorierte polymerisierbare Verbindungen auf Imidazol-Basis beschrieben. Die Synthese dieser Verbindungen ist jedoch aufwendig und erfordert besondere Reaktionsbedingungen. Ein Beispiel einer solchen Verbindung ist folgendes Imidazolium-Salz:

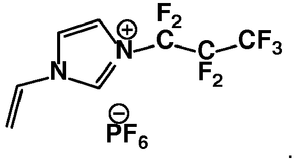

Die US 2012/149800 A1 und die US 2012/101184 A1 offenbaren antistatische Beschichtungen für optische Geräte, die aus vernetzbaren ionischen Flüssigkeiten gewonnen werden.

Ziel der Erfindung ist es, eine vernetzbare fluorierte Zusammensetzung bereitzustellen, die in einfacher Weise zu Beschichtungen bzw. Wachsen mit hervorragenden hydrophoben, oleophoben und antistatischen Eigenschaften verarbeitet werden kann.

Vor diesem Hintergrund betrifft die Erfindung ein Verfahren zur Herstellung eines beschichteten Artikels, wobei die Oberfläche des Artikels mit einer vernetzbaren Zusammensetzung benetzt wird und die vernetzbare Zusammensetzung anschließend zu einer Beschichtung vernetzt wird, wobei die vernetzbare bzw. polymerisierbare Zusammensetzung funktionalisierte Monomere umfasst, die eine vernetzbare bzw. polymerisierbare Gruppe, eine kationische Gruppe und eine fluorierte Gruppe aufweisen, wobei die Zusammensetzung zu den kationischen Gruppen der funktionalisierten Monomere korrespondierende Anionen umfasst. Erfindungsgemäß handelt es sich bei der kationischen Gruppe um eine N-substituierte zyklische und insbesondere heteroaromatische Gruppe, die einen 5-Ring und/oder wenigstens zwei Heteroatome umfasst. Zwischen der kationischen Gruppe und der fluorierten Gruppe ist erfindungsgemäß ein Spacer angeordnet, bei dem es sich um eine ungeladene und unfluorierte Organylgruppe und vorzugsweise um eine C1 bis C6 Alkylengruppe handelt.

Der Begriff der Polymerisation, wie er vorliegend verstanden wird, beschreibt eine Vernetzung einzelner Monomere untereinander. Der Begriff der Vernetzung, wie er vorliegend verstanden wird, stellt einen Oberbegriff für die Polymerisation einerseits und eine Vernetzung mit anderen Substraten (beispielsweise Grafting auf Oberflächen eines Trägersubstrats) dar. Darunter wird die Ausbildung einer kovalenten Bindung verstanden. Eine *"vernetzbare"* Funktionalität umfasst nach dem vorliegenden Verständnis auch polymerisierbare Funktionalitäten.

Gegenüber beispielsweise aus US 2005/0287111 A1 oder US 2009/0286976 A1 vorbekannten Zusammensetzungen mit fluorierten kationischen Monomeren lassen sich die erfindungsgemäß eingesetzten Zusammensetzungen wesentlich besser vernetzen bzw. polymerisieren. So können Beschichtungen mit höheren Fluorkonzentrationen und verbesserten hydrophoben und oleophoben Eigenschaften bereitgestellt werden. Zudem ist die Synthese ökonomischer und kann unter milderen Bedingungen durchgeführt werden.

Ferner bieten die funktionalisierten Monomere eine hohe Flexibilität in der Synthese und die Zusammensetzung insgesamt ermöglicht eine hohe Flexibilität in den Eigenschaften einer daraus resultierenden Beschichtung.

Die fluorierte Gruppe enthält C-F Bindungen. Von der fluorierten Gruppe geht eine hydrophobe und oleophobe Wirkung einer Beschichtung aus, die durch Polymerisation der erfindungsgemäß eingesetzten Zusammensetzung stabilisiert wird. Die kationische Gruppe ermöglicht die Lösung der funktionalisierten Monomere in Lösungsmitteln mit höherer Polarität und erhöht die Wechselwirkung mit Substraten, die zumindest eine negative Partialladung aufweisen.

Aus der erfindungsgemäß eingesetzten Zusammensetzung kann durch Polymerisation beispielsweise eine polymere Beschichtung entstehen, die repetitive Einheiten aufweist, die auf die funktionalisierten Monomere zurückgehen.

In einer Ausführungsform liegen die funktionalisierten Monomere bereits vorpolymerisiert als oligomere oder polymere Einheiten (gegebenenfalls co-polymere oder co-oligomere Einheiten) in der Zusammensetzung vor, wobei repetitive Einheiten dieser oligomeren oder polymeren Einheiten auf das funktionalisierte Monomer zurückgehen. In dieser Ausführungsform umfasst die vernetzbare Zusammensetzung derartige oligomere oder polymere Einheiten. Es kann sich also um telechelische Einheiten handeln, d.h. Oligomere, die an ihren Enden weiter vernetzbar sind.

In einer Ausführungsform handelt es sich bei der kationischen Gruppe um eine N,N-disubstituierte Imidazoliumgruppe. Eine der N-substituierten Gruppen kann die vernetzbare Gruppe aufweisen oder darstellen und die andere der N-Alkylgruppen kann den Spacer und die fluorierte Gruppe umfassen. Derartige Monomere haben besonders vorteilhafte Eigenschaften bezüglich ihres synthetischen Zugangs und in der Polymerisation gezeigt.

In einer Ausführungsform umfassen die funktionalisierten Monomere genau eine kationische Gruppe.

In einer Ausführungsform umfasst die vernetzbare Gruppe eine vernetzbare ethylenische Funktionalität, d.h. eine ethylenisch ungesättigte Gruppe oder allgemeiner eine reaktive Doppelbindung. Besonders bevorzugt ist in diesem Zusammenhang eine substituierte oder unsubstituierte Vinylgruppe. Dies kann vorteilhaft sein, um die Systeme mittels der Doppelbindung mit einer Substratoberfläche zu vernetzen (Grafting). Derartige Additionsreaktionen können beispielsweise bei der Beschichtung von Textilien von Bedeutung sein.

Beispielsweise kann vorgesehen sein, dass eine Vinylgruppe direkt an das N1 einer kationischen Imidazoliumgruppe des funktionalisierten Monomers substituiert ist. Diese Monomere lassen sich mit einer besonders guten Ausbeute und mit hoher Kinetik vernetzen bzw. polymerisieren. Die für das vorliegende Ausführungsbeispiel herangezogene Zählweise ist die Folgende:

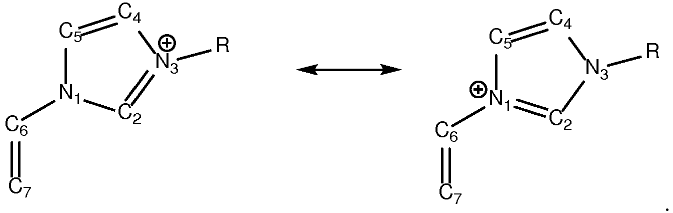

Als alternative vernetzbare ethylenische Funktionalitäten sind auch Allylgruppen, (Meth)acrylatgruppen oder (Meth)acrylamidgruppen möglich.

In einer Ausführungsform umfassen die funktionalisierten Monomere genau eine vernetzbare Gruppe.

In einer Ausführungsform handelt es sich bei der fluorierten Gruppe um eine vollständig fluorierte Kohlenwasserstoffgruppe. Bevorzugt ist eine vollständig fluorierte und gegebenenfalls lineare Gruppe vom Typ -(CF₂)ₙ-CF₃, wobei n zwischen 2 und 9 liegt und vorzugsweise 4, 5 oder 6 ist. Als vollständig fluorierte Kohlenwasserstoffgruppe ist eine Perfluoroorganylgruppe zu verstehen, in der alle Wasserstoffatome durch Fluoratome ersetzt sind. Die Kettenlänge von 5 bis 7 (n=4-6) ist besonders vorteilhaft, da die hydrophoben und oleophoben Eigenschaften einer durch Polymerisation der Zusammensetzung entstehenden Beschichtung bei dieser Kettenlänge bereits sehr stark ausgeprägt sind, gleichzeitig aber noch eine gute Umweltverträglichkeit gegeben ist. Besonders bevorzugt ist der Einsatz einer Perfluorhexylgruppe mit der Strukturformel -(CF₂)₅-CF₃.

Die fluorierte Gruppe ist kovalent mittels des Spacers indirekt an die kationische Gruppe gebunden.

Vorzugsweise handelt es sich bei dem Spacer um eine vorzugsweise lineare Alkylengruppe mit zwischen 1 und 10, vorzugsweise zwischen 1 und 5 und weiter vorzugsweise mit 2 oder 3 Kohlenstoffatomen. Besonders bevorzugt ist Ethylen.

In einer Ausführungsform kann die fluorierte Kette aus einem Fluoroether bestehen. In diesen Fällen ist der Spacer vorzugsweise eine Methylen- oder Ethylengruppe.

In einer Ausführungsform ist vorgesehen, dass der Spacer und die fluorierte Gruppe an das N3 einer kationischen Imidazoliumgruppe des funktionalisierten Monomers gebunden sind. Die herangezogene Zählweise ist dabei wie im Zusammenhang mit der vernetzbare N1 Vinyl-Gruppe erklärt.

In einer Ausführungsform umfassen die funktionalisierten Monomere genau eine fluorierte Gruppe.

In einer Ausführungsform hat der aus Spacer und fluorierter Gruppe bestehende Substituent die Formel -(CH₂)₂-(CF₂)₅-CF₃.

In einer Ausführungsform hat das funktionalisierte Monomer die nachfolgend gezeigte Struktur, wobei n wie oben definiert ist:

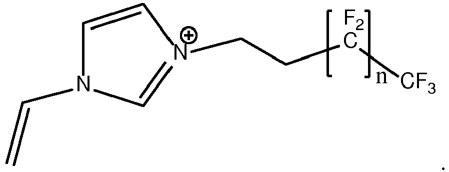

Alternativ können auch folgende Substanzen in Betracht gezogen werden:

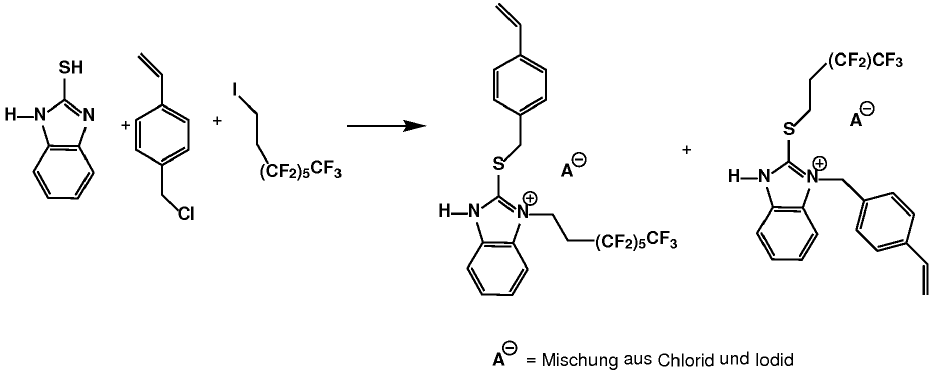

In einer Ausführungsform umfasst das funktionalisierte Monomer ferner einen Thioether bzw. eine Organylsulfidgruppe. Dadurch kann auf effiziente Weise eine weitere Funktionalisierung des Monomers vorgenommen werden. Beispielsweise kann der Thioether direkt an das C2 einer kationischen Imidazoliumgruppe des funktionalisierten Monomers substituiert sein.

Der Thioether kann durch Substitutionsreaktion aus einer Thiongruppe oder Thiolgruppe und beispielsweise einem halogenierten Kohlenwasserstoff erhalten werden.

Alternativ zu dem thioether kann das funktionalisierte Monomer in der vernetzbaren Zusammensetzung auch eine Thiongruppe als potentielle Vorstufe eines Thioethers aufweisen. Diese Gruppe kann als Schutzgruppe während der Polymerisationsreaktion dienen und anschließend im polymerisierten oder teilpolymerisierten Zustand der Zusammensetzung weiterderiviert werden, um einen Thioether zu erhalten.

Beispielsweise kann das Thion aber auch nach der Polymerisation der Zusammensetzung oxidativ in ein Disulfid übergeführt werden. Durch eine nachfolgende Alkylierung am Thion kann eine gewünschte Modifikation erfolgen.

Ein weiterer Vorteil der Thion-Gruppe ist, dass diese in der Lage ist, Metallkomplexe zu bilden. Dies kann speziell als Haftungsvermittler auf Metalloberflächen von großer Bedeutung sein.

In einer Ausführungsform umfassen die funktionalisierten Monomere, sofern vorhanden, genau einen Thioether oder genau eine Thiongruppe.

Alternativ zu einem Thioether oder einer Thiongruppe können auch andere schwefelhaltige Gruppen wie beispielsweise Thiolgruppen, Sulfoxidgruppen, Sulfonsäuregruppen oder Sulfonsäureestergruppen zum Einsatz kommen.

In einer Ausführungsform weist der Organylrest des Thioethers (der Organylsulfidgruppe) die oder eine weitere vernetzbare Gruppe auf. Bei der weiteren vernetzbaren Gruppe kann es sich um eine vernetzbare ethylenische Funktionalität bzw. reaktive Doppelbindung, wie oben im Zusammenhang mit der vernetzbaren Gruppe beschrieben, oder um eine nicht-ethylenische vernetzbare Gruppe handeln. In dieser Ausführungsform trägt das funktionalisierte Monomer wenigstens zwei vernetzbare Gruppen und kann daher als Quervernetzer dienen. Geeignete ethylenische vernetzbare Gruppen umfassen wiederum insbesondere substituierte oder unsubstituierte Vinylgruppen. Alternativ sind wiederum Allylgruppen, (Meth)acrylatgruppen oder (Meth)acrylamidgruppen denkbar. Geeignete nicht-ethylenische vernetzbare Gruppen umfassen beispielsweise Isocyanat-Gruppen oder Epoxid-Gruppen oder auch Hydroxylgruppen oder Aminogruppe, die beispielsweise mit Isocyanaten reagieren können. Wird eine nicht-ethylenische vernetzbare Gruppe gewählt, so können die so funktionalisierten Monomere unterschiedliche Polymerklassen als Crosslinker miteinander verbinden.

In einer Ausführungsform umfasst das funktionalisierte Monomer eine weitere fluorierte Gruppe, die an den Organylrest des Thioethers (der Organylsulfidgruppe) substituiert ist oder die den Organylrest des Thioethers darstellt. Im ersten Fall dient der Organylrest als Spacer. In dieser Ausführungsform kann das funktionalisierte Monomer also zwei oder gar mehr als zwei fluorierte Gruppen aufweisen, wobei beispielsweise eine erste fluorierte Gruppe am N3 einer kationischen Imidazoliumgruppe und/oder eine weitere fluorierte Gruppe direkt oder mittelbar am Schwefel substituiert ist. Der Organylrest des Thioethers kann also perfluorierte Anteile aufweisen, um die hydrophoben und oleophoben Eigenschaften des funktionalisierten Monomers weiter zu erhöhen.

In einer Ausführungsform weisen die funktionalisierten Monomere zwischen 8 und 50 und vorzugsweise zwischen 10 und 30 schwere Atome auf. Unter einem schweren Atom werden vorliegend alle Atome außer Wasserstoff verstanden.

In einer Ausführungsform liegt die molare Masse der funktionalisierten Monomere zwischen 100 und 3500 g/mol, vorzugsweise zwischen 130 und 1000 g/mol.

In einer Ausführungsform handelt es sich bei den funktionalisierten Monomeren um Ionische Flüssigkeiten.

In einer Ausführungsform des funktionalisierten Monomers liegt die kationische Gruppe zwischen der vernetzbaren Gruppe und der fluorierten Gruppe. Die Konstitution des funktionalisierten Monomers ist in dieser Ausführungsform also dergestalt, dass die vorzugsweise einzige sich zwischen der vernetzbaren und der fluorierten Gruppe erstreckende Kette kovalenter Verbindungen durch das kationisch geladene Zentrum verläuft, beispielsweise durch das positiv geladene Stickstoffatom oder den stickstoffhaltigen Ring mit der delokalisierten positiven Ladung. Beispielsweise werden derartige Monomere dadurch erhalten, dass Edukte umfassend eine vernetzbare Gruppe und eine Amino- oder Iminogruppe bzw. einen stickstoffhaltigen Heterozyklus quaternisiert werden, wobei die fluorierte Gruppe im Rahmen der Quaternisierung des Stickstoffs hinzugefügt wird.

In einer Ausführungsform sind die vernetzbare Gruppe, die fluorierte Gruppe und der Thioether sternförmig ausgehend von der kationischen Gruppe angeordnet. Derartige Moleküle können ausgehend von den beschriebenen Vorläufern, in denen die kationische Gruppe zwischen der vernetzbaren Gruppe und der fluorierten Gruppe liegt, durch Addition eines Schwefels an dem positiv geladenen stickstoffhaltigen Heterozyklus zum Thion und anschließende Addition eines Organyls erhalten werden.

In einer Ausführungsform trägt der Organylrest des Thioethers das zu der kationischen Gruppe korrespondierende Anion. Bei diesem kovalent an das funktionalisierte Monomer gebundenen Anion kann es sich beispielsweise um eine Sulfat-, Sulfonat-, Phosphonat-, Phosphat-, Carbonat-, Carbamat-, Triflat- oder Carboxylatgruppe, insbesondere eine Sulfonatgruppe handeln.

In einer Ausführungsform ist das zu der kationischen Gruppe korrespondierende Anion, unabhängig vom Vorhandensein eines Thioethers, kovalent an das funktionalisierte Monomer gebunden, beispielsweise mittels eines direkt, d.h. ohne zwischengelagerten Schwefel, an die kationische Gruppe gebundenen Organylrests. Beispiele geeigneter derartiger Anionen umfassen Sulfat-, Sulfonat-, Phosphonat-, Phosphat-, Carbonat-, Carbamat-, Triflat- oder Carboxylatgruppen, wobei der Einsatz einer Sulfonatgruppe bevorzugt sein kann.

In einer Ausführungsform sind die Anionen nicht kovalent an das Copolymer gebunden.

In einer Ausführungsform handelt es sich bei dem Anion um Chlorid, lodid, Bromid, Arylsulfonat, Alkylsulfonat, Alkylsulfat, Sulfat, Arylphosphonat, Alkylphosphonat, Monoalkylphosphat, Dialkylphosphat, Hydrogenphosphat, Phosphat, Hexafluorophosphat, Hydrogencarbonat, Carbonat, Carbamat, Alkylcarbonat, Trifluoromethansulfonat, Bis(trifluoromethan)sulfonamid, Nonaflat oder Carboxylat. Denkbar ist auch der Einsatz von Picrat, Hennat oder Pyridoxalphosphat.

In einer Ausführungsform handelt es sich bei den Anionen um Anionen welche in pharmazeutisch akzeptierbaren Salzen vorkommen. Diese sind beispielsweise in Haynes et al. Wiley InterScience 2005 und in Handbook of Pharmaceutical Salts Properties, Selection, and Use 2008 Helvetica Chimica Acta beschrieben.

In einer Ausführungsform können die Anionen Konstituenten eines Metallkomplexsalzes sein, in dem die ursprünglichen in 2-Stellung unsubstituierten Imidazolium-Ringe zu NHC-Carben-Liganden (z.B. durch Silberoxid) deprotoniert wurden (NHC = nitrogen-heterocyclic carbene complexes). Für nicht polymerisierbare Imidazole zeigt Skalicky et al. Organometallics, 2012, 31 (4), pp 1524-1532 einen einfach zugänglichen Syntheseweg. Zudem wird darin die Synthese von nicht vernetzbaren Fluoroethern beschrieben.

In einer Ausführungsform handelt es sich bei den Anionen um ihrerseits vernetzbare bzw. polymerisierbare Verbindungen, wodurch das Anion daher in einem entstehenden Polymer kovalent an die Polymerketten gebunden werden kann. Derartige vernetzbare Anionen umfassen eine vernetzbare Gruppe und eine anionische Gruppe. Geeignete vernetzbare Gruppen entsprechen denjenigen Gruppen, die im Zusammenhang mit den funktionalisierten Monomeren diskutiert wurden. Geeignete anionische Gruppen umfassen die oben im Zusammenhang mit den freien Anionen diskutierten Gruppen. Besonders bevorzugt sind Anionen, die durch Abspaltung eines sauren Protons gebildet werden. Beispiele geeigneter anionischer Monomere umfassen daher anionische Derivate des (Meth)acrylats oder (Meth)acrylamids, beispielsweise Derivate des (Meth)acrylats oder (Meth)acrylamids, die wenigstens eine Sulfat-, Sulfonat-, Phosphonat-, Phosphat-, Carbonat-, Carbamat-, Triflat- oder Carboxylatgruppe, insbesondere eine Sulfonatgruppe umfassen. Beispiele umfassen Acrylamido-2-methylpropansulfonat oder 3-(Acryloyloxy)-1 -propansulfonat.

In einer Ausführungsform handelt es sich bei den Anionen um ein fluoriertes Tensid, welches eine anionisch geladene Gruppe, vorzugsweise wie im vorhergehenden Absatz diskutiert, und eine fluorierte Gruppe, vorzugsweise wie im Zusammenhang mit dem funktionalisierten Monomer diskutiert, umfasst. Insbesondere Ersatzstoffe der Perfluorooctansäure (PFOA), wie 3H-perfluoro-3-((3-methoxy-propoxy)propansäure) sind bevorzugt.

In einer Ausführungsform handelt es sich bei wenigstens einem Teil der Anionen um Halogenide. Iodide sind besonders bevorzugt.

In einer Ausführungsform umfasst die Zusammensetzung ferner ein Halogenalkan, wobei das Halogenalkan vorzugsweise eine fluorierte Gruppe trägt. Auch bei der fluorierten Gruppe des Halogenalkan kann es sich beispielsweise um eine teilweise oder vollständig fluorierte Kohlenwasserstoffgruppe handeln, vorzugsweise um eine vollständig fluorierte lineare Gruppe vom Typ -(CF₂)ₙ-CF₃, wobei n zwischen 2 und 10 und vorzugsweise zwischen 4 und 6 liegt. Das Halogenalkan kann beispielsweise vom Typ X-(CH₂)ₘ-(CF₂)ₙ-CF₃ sein, wobei X ein Halogen und vorzugsweise Brom oder Iod ist und m zwischen 0 und 5 liegen kann und vorzugsweise 0 ist, da die Elektronegativität der Fluor-Atome die Bildung eines Halogen-Komplexes begünstigt. Bevorzugte Halogenalkane umfassen Perfluorohalogenalkane wie 1-Bromoperfluorooctan oder 1-lodoperfluorohexan. Das Halogenalkan kann mit dem Halogenid- und vorzugsweise lodid-Anion in der vernetzbaren Zusammensetzung und auch in der durch Polymerisation erhaltenen Beschichtung einen sogenannten Halogen-Komplex bilden, worunter eine nichtkovalente Wechselwirkung zwischen einem Halogen und einem Wechselwirkungspartner verstanden wird. Eine umfassende Beschreibung dieser Komplexe findet sich beispielsweise in Gilday et al., Chem. Rev. 2015, 115, 7118-7195. Dies hat gleich mehrere positive Effekte. Zum einen wird durch die Delokalisierung der negativen Ladung über die beispielsweise beiden HalogenAtome des Komplexes Elektronendichte aus der kationischen Gruppe der funktionalisierten Monomere abgezogen, was zu einer stärkeren positiven Ladung führt und daher zu einer verbesserten Löslichkeit der funktionalisierten Monomere in einem organischen Lösungsmittel mit höherer Polarität führen kann. Des Weiteren kann durch eine Funktionalisierung des Halogenalkans mit einer fluorierten Gruppe der hydrophobe und oleophobe Effekt der in der durch Polymerisation erhaltenen Beschichtung signifikant gesteigert werden, ohne die Kettenlänge der fluorierten Gruppe in den funktionalisierten Monomeren erhöhen zu müssen. Letztlich kann das Halogenalkan auch als SN2-Reagens für weitere Reaktionen dienen, um beispielsweise mit Resten eines Photoinitiators zu reagieren.

In einer Ausführungsform handelt es sich bei wenigstens einem Teil der Anionen um eine zwitterionische Verbindung, vorzugsweise um ein Betain.

In einer Ausführungsform umfasst die Zusammensetzung eine Kombination zweier oder mehrerer unterschiedlicher Anionen.

In einer Ausführungsform weist die Zusammensetzung zusätzliche Monomere auf, die wenigstens eine vernetzbare Gruppe, jedoch nicht ferner sowohl eine kationische als auch eine fluorierte Gruppe aufweisen. Vorzugsweise weisen diese zusätzlichen Monomere weder eine komplexierende noch eine fluorierte Gruppe auf. Bei den zusätzlichen Monomeren kann es sich um einfache Co-Monomere mit einer vernetzbare Gruppe oder quervernetzende Monomere mit zwei oder mehreren vernetzbaren Gruppen handeln. In dieser Ausführungsform kann aus der erfindungsgemäß eingesetzten Zusammensetzung durch Polymerisation beispielsweise eine polymere Beschichtung entstehen, die Co-Polymere aufweist, welche repetitive Einheiten umfassen, die auf die funktionalisierten Monomere sowie die zusätzlichen Monomere zurückgehen.

Beispiele geeigneter zusätzlicher Monomere mit einer vernetzbaren Gruppe umfassen (Meth)acrylsäure und (Meth)acrylsäurederivate, unter anderem Acrylsäure, Methacrylsäure, 3-Sulfopropylacrylat, Hydroxyethyl(meth)acrylat und (Poly)ethylenglycol(meth)acrylat. Weitere Beispiele geeigneter zusätzlicher Monomere mit einer vernetzbaren Gruppe umfassen (Meth)acrylamid und (Meth)acrylamid-Derivate, unter anderem 2-Acrylamido-2-methylpropansulfonsäure (AMPS), 2-Acrylamido-2-methylpropansulfonat, N,N-Dimethyl aminoethyl acrylamid (DMAEAA), N,N-Dimethyl aminopropyl acrylamid (DMAPAA), N-Hydroxyethylacrylamid (HEAA), 2-Hydroxyethylmethacrylat (HEMA), Dimethylacrylamid (DMAA), N-Isopropylacrylamid (NIPAM), Diethylacrylamid (DEAA) und N-tert-Butylacrylamid (t-BAA). Zudem können Urethanacrylate, Epoxyacrylate und Derivate des Epoxyacrylats eingesetzt werden.

Beispiele geeigneter quervernetzbarer Monomereinheiten mit mehr als einer vernetzbaren Gruppe umfassen Methylenmethylbis(meth)acrylat, Ethylenbisethyl(meth)acrylat, (Poly)ethylenglycoldi(meth)acrylat, Glycerindi(meth)acrylat, Glycerintri(meth)acrylat, 1,9-Nonanedioldi(meth)acrylat, Dipentaerythriolhexaacrylat, Dipentaerithritolpenta-/hexaacrylat und Trimethylolpropanethoxylattriacrylat.

In einer Ausführungsform umfasst die Zusammensetzung als zusätzliche Monomere ungeladene Fluoroacrylate. Die funktionalisierten Monomere dienen in dieser Ausführungsform als Tenside für diese ihrerseits ebenfalls vernetzbaren Verbindungen. Beispiele umfassen 1H,1H,2H,2H-Perfluorodecylacrylat, Pentafluoropropylacrylat und 1H,1H,2H,2H-Perfluoroalkylmethacrylate.

Bei der vernetzbaren Gruppe wenigstens einiger zusätzlicher Monomere und/oder quervernetzbarer Monomere kann es sich in einer Ausführungsform um eine Thiolgruppe handeln. Bei einer radikalischen Härtung reagiert die Thiolgruppe mit einem Olefin zu einem Thioether.

In einer Ausführungsform umfasst die Zusammensetzung ferner einen Initiator, vorzugsweise einen Photoinitiator und weiter vorzugsweise einen radikalischen Photoinitiator. Besonders bevorzugt ist die Verwendung von Photoinitiatoren, die auf Licht im UV-Bereich ansprechen. Geeignete Photoinitiatoren umfassen beispielsweise 2-Hydroxy-2-methyl-1 -phenyl-propan-2-on, 2-hydroxy-1-[4-(2-hydroxyethoxy)phenyl]-2-methylpropan-1-on, 2,2-Dimethoxy-2-phenyl acetophenon, 1-[4-(2-Hydroxyethoxy)-phenyl]-2-hydroxy-2-methyl-1 -propan-1 -on, 1-Hydroxycyclohexylphenylketon oder Trimethylbenzoyldiphenylphosphinoxid. Der Anteil der Photoinitiatoren in der vernetzbaren Zusammensetzung kann zwischen 0,05 bis 5 Gew.-% betragen. Bevorzugte Bereiche umfassen 0,1 bis 4 Gew.-% oder 0,1 bis 3,5 Gew.-%.

Ferner kann die Zusammensetzung ein Lösungsmittel und/oder einen Weichmacher und/oder weitere Additive umfassen.

Geeignete Lösungsmittel umfassen beispielsweise polare organische Lösungsmittel. Ein bevorzugtes organisches Lösungsmittel ist Hydrofluoroether (HFE).

Als Weichmacher können beispielsweise nicht fluorierte Additive verwendet werden. Beispiele umfassen Glycerin, Polyethylenglykol, Trikresylphosphat oder Paraffinöl. Der Einsatz von Paraffinöl kann bevorzugt sein.

In einer Ausführungsform umfasst die Zusammensetzung ferner ein ionisches Additiv. Bei diesem Additiv kann es sich um ein System handeln, das bei 21°C eine ionische Flüssigkeit bildet. Es kann vorzugsweise gleichzeitig als Lösungsmittel dienen. Vorzugsweise umfasst dieses System eine kationische Verbindung mit einer kationischen und fluorierten Gruppe, jedoch ohne vernetzbare Gruppe, sowie ein Anion. Durch die Verwendung derartiger Lösungsmittel können sich die hydrophoben und oleophoben Eigenschaften einer aus der Zusammensetzung hergestellten Beschichtung weiter erhöhen. Sie können in das Netzwerk der resultierenden Beschichtung eingelagert werden und einen Film an der Oberfläche bilden. Durch den generell niedrigen Dampfdruck ionischer Flüssigkeiten bleibt ihre Konzentration in der Beschichtung über eine lange Dauer konstant. Die kationische und fluorierte Gruppe der kationischen Verbindung können wie die kationische und fluorierte Gruppe des funktionalisierten Monomers definiert sein. Auch ein Spacer kann zwischen kationischer und fluorierter Gruppe in derselben Form vorhanden sein, wie dies im Zusammenhang mit dem funktionalisierten Monomer dargestellt wurde. Dasselbe gilt für das Anion. Beispiele geeigneter ionischer Additive umfassen die Folgenden:

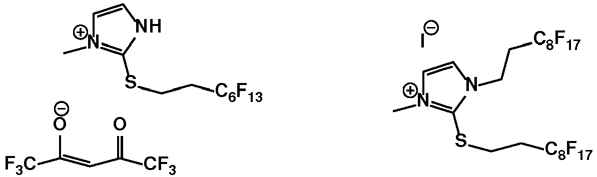

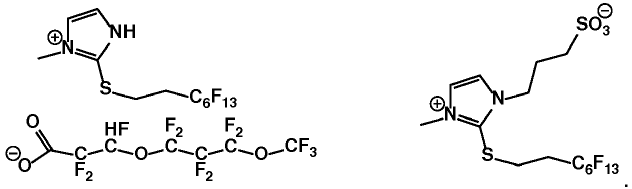

Weitere denkbare Additive umfassen fluorierte Verbindungen wie beispielsweise Perfluoropolyether.

In einer Ausführungsform sind als Additive ferner Nanopartikel bzw. Nanomaterialien enthalten. Diese können dazu dienen, die Kratzfestigkeit und/oder die hydrophoben und oleophoben Eigenschaften einer aus der Zusammensetzung resultierenden Beschichtung zu verbessern. Leitfähige Partikel können ebenfalls zum Einsatz kommen, beispielsweise um die elektrostatische Aufladung zu verringern oder um Reibungswärme abzutransportieren. Beispiele geeigneter Nanopartikel umfassen SiO₂-Nanopartikel, Carbon-Nanotubes, TiO₂-Nanopartikel, Graphit, fluorierten Graphit, Teflon-Partikel und hexagonale oder kubische BN-Nanopartikel. Auch der Einsatz von Mikropartikeln, besonders solcher aus oder enthaltend SiO₂ oder Teflon ist denkbar.

In einer Ausführungsform besteht die Zusammensetzung aus den genannten Bestandteilen und etwaigen Verunreinigungen, deren Anteil aber weniger als 3 Gew.-% der Gesamtmasse beträgt.

Je nach Verwendungszweck und Darreichungsform sind andere Konzentrationen der funktionalisierten Monomere zu verwenden.

Im einfachsten Fall besteht die Zusammensetzung lediglich aus den funktionalisierten und ggf. weiteren Monomeren und einem Initiator. In diesem Fall kann der Anteil der Monomere (einschließlich der Anionen) zwischen 93 und 99,95 Gew.-% betragen.

In einer Ausführungsform handelt es sich bei der Zusammensetzung um eine Lack-Mischung, welche folgenden Bestandteile aufweisen kann: 0,05-15 Gew.-% funktionalisiertes Monomer (nebst Anion); 0-80 Gew.-% Co-Monomere (nebst Anion, sofern geladen); 0-60 Gew.-% Quervernetzer (nebst Anion, sofern geladen); 0-60 Gew.-% Bindemittel; 0-40 Gew.-% Weichmacher; 0,05-7 Gew.-% Initiator; 0-40 Gew.-% Pigmente; 0-40 Gew.-% Additive (z.B.: Verdickungsmittel, Dispergieradditive, Verlaufsadditive, Entschäumer, Matierungsmittel); 0-80 Gew.-% Lösungsmittel; 0-20 Gew.-% Füllstoffe zur Erzielung von technischen Eigenschaften (z.B.:Flammschutzadditive, leitende Pigmente); mit der Maßgabe, dass diese Bestandteile derart vorhanden sind, dass deren gemeinsamer Anteil 100 Gew.-% ausmacht. Diese Mischung eignet sich beispielsweise für Lacke.

In einer anderen Ausführungsform handelt es sich bei der Zusammensetzung um eine Mischung, welche folgenden Bestandteile aufweisen kann: 1-95 Gew.-% funktionalisiertes Monomer (nebst Anion); 0-60 Gew.-% Co-Monomere (nebst Anion, sofern geladen); 0-60 Gew.-% Quervernetzer (nebst Anion, sofern geladen); 0-60 Gew.-% Bindemittel; 0,05-7 Gew.-% Initiator; 0-40 Gew.-% Pigmente; 0-40 Gew.-% Additive (z.B.: Verdickungsmittel, Dispergieradditive, Verlaufsadditive, Entschäumer, Matierungsmittel, pH-Puffer); 0-80 Gew.-% Lösungsmittel; 0-20 Gew.-% Füllstoffe zur Erzielung von technischen Eigenschaften (z.B.:Flammschutzadditive, leitende Pigmente); mit der Maßgabe, dass diese Bestandteile derart vorhanden sind, dass deren gemeinsamer Anteil 100 Gew.-% ausmacht. Diese Mischung eignet sich beispielsweise für Lacke, Zahnfüllungen oder zur Beschichtung von Membranen, die extrem hydrophob und oleophob sein müssen.

In einer wiederum anderen Ausführungsform handelt es sich bei der Zusammensetzung um eine Mischung, vorzugsweise ein Gel oder eine Paste, welche folgenden Bestandteile aufweisen kann: 1-95 Gew.-% funktionalisiertes Monomer (nebst Anion); 0-90 Gew.-% Co-Monomere (nebst Anion, sofern geladen); 0-60 Gew.-% Quervernetzer (nebst Anion, sofern geladen); 0-70 Gew.-% Bindemittel; 0-60 Gew.-% Weichmacher; 0-7 Gew.-% Initiator; 0-40 Gew.-% Füllstoffe; 0-70 Gew.-% Lösungsmittel; mit der Maßgabe, dass diese Bestandteile derart vorhanden sind, dass deren gemeinsamer Anteil 100 Gew.-% ausmacht.

In einer Ausführungsform können mit den oben beschriebenen Zusammensetzungen Wachse hergestellt werden, welche beispielsweise auf Laufflächen von Wintersportgeräten aufgetragen werden können. Diese Wachse können beispielsweise die folgenden Bestandteile aufweisen: 2-100 Gew.-% der oben beschriebenen Zusammensetzung, 0-98 Gew.-% Paraffinwachs; 0-20 Gew.-% Füllstoffe, 0-95 Gew.-% Lösungsmittel; wiederum mit der Maßgabe, dass diese Bestandteile derart vorhanden sind, dass deren gemeinsamer Anteil 100 Gew.-% ausmacht.

In einer Ausführungsform können mit der Zusammensetzung Textilfasern beschichtet werden. Eine für eine derartige Anwendung geeignete Zusammensetzung kann beispielsweise wie folgt zusammengesetzt sein: 0,5-90 Gew.-% funktionalisiertes Monomer bzw. Oligomer/Polymer (nebst Anion); 0-60 Gew.-% Co-Monomere bzw. Oligomere/Polymere (nebst Anion, sofern geladen); 0-20 Gew.-% Quervernetzer (nebst Anion, sofern geladen); 0-7 Gew.-% Initiator; 0-5 Gew.-% Katalysatoren; 0-40 Gew.-% Additive; 0-99 Gew.-% Lösungsmittel; mit der Maßgabe, dass diese Bestandteile derart vorhanden sind, dass deren gemeinsamer Anteil 100 Gew.-% ausmacht. Diese Zusammensetzung kann in einem Verhältnis von beispielsweise 99:1 bis 20:80 mit den zu beschichtenden Fasern (z.B.: Cellulose, Hemicellulose, Lignocellulose, Keratin) vermengt werden. Dabei kann vorgesehen sein, dass die zu beschichtenden Fasern mit der Rezeptur gesättigt und anschließend nach möglichen Vorbehandlungen vernetzt werden.

Die Zusammensetzung kann beispielsweise auch zur Beschichtung von Oberflächen verwendet werden.

Im rahmen des erfindungsgemäßen Verfahrens kann vorgesehen sein, dass die Monomere der Zusammensetzung sich untereinander zu Polymeren vernetzen (polymerisieren) und/oder dass die Monomere der Zusammensetzung bzw. die durch Polymerisation entstandenen Oligomere oder Polymere mit der Oberfläche des Artikels vernetzen. Bei letzterer Grafting-Reaktion kann beispielsweise eine kovalente C-C oder eine C-S Bindung zwischen dem Monomer/Oligomer/Polymer und der Oberfläche des Artikels ausgebildet werden. In einer Ausführungsform kann die Zusammensetzung an Oberflächen selbstorganisierende Monoschichten erzeugen.

In einer Ausführungsform erfolgt die Polymerisation photoinitiiert, vorzugsweise unter Beteiligung eines Photoinitiators in der vernetzbaren Zusammensetzung.

Bei dem verwendeten Licht handelt es sich vorzugsweise um UV-Licht.

In einer alternativen Ausführungsform sind auch Aushärtungen im sichtbaren Bereich denkbar. Für eine derartige Aushärtung geeignete Photoinitatoren umfassen beispielsweise Bis-(4-methoxybenzoyl)diethylgerman.

In einer Ausführungsform kann eine Strahlen- bzw. Photoinitiation auch direkt, d.h. ohne Photoinitiator erfolgen, beispielsweise durch Verwendung hochenergetischer Strahlung wie z.B. γ-Strahlung oder E-Beam.

Alternativ kann die Polymerisation auch thermisch oder chemisch initiiert werden. Beispielsweise kann eine Initiierung unter Verwendung eines organischen Peroxids wie Benzoylperoxid, eines anorganischen Peroxosystems, wie Kaliumperoxodisulfat oder eines azo-basierenden Initiators wie Azobisisobutyronitril erfolgen. Auch eine Fenton-Polymerisation eignet sich zum Einsatz im Rahmen eines erfindungsgemäßen Verfahrens.

Ferner ist eine plasmainduzierte, anionische oder kationische Polymerisation denkbar.

Ferner sind kontrollierte freie radikalische Polymerisationen wie RAFT (Reversible Additions-Fragmentierungs Kettenübertragungs Polymerisation), ATRP (Atom Transfer Radical Polymerization) und NMP (Nitroxid-vermittelte Polymerisation) mit den methodenspezifischen Initatoren denkbar.

In einer Ausführungsform kann die kationische Gruppe des funktionalisierten Monomers während der Herstellung des Copolymers mit einer Schutzgruppe geschützt sein. Beispielsweise kann der Schutz in Form einer Thioketonfunktion erfolgen.

Sofern das funktionalisierte Monomer ein Thion aufweist, kann vorgesehen sein, dass das Thion nach der Polymerisation der Zusammensetzung in ein Disulfid übergeführt wird und ferner nachfolgend alkyliert wird, um eine gewünschte Modifikation herbeizuführen.

Bei dem Artikel kann es sich beispielsweise um Textilfasern oder ein fertiges Textil handeln, um den Fasern bzw. dem Textil hydrophobe und oleophobe und/oder brandhemmende Eigenschaften zu verleihen.

Grundsätzlich können alle Gruppen von Fasern beschichtet werden, beispielsweise Naturfasern, wie z.B. Baumwolle, Hanf, Leinen, Wolle, Seide, Chemiefasern aus synthetischen Polymeren wie Polyester, Polyamid, Polypropylen, Chemiefasern aus natürlichen Polymeren wie z.B. regenerierte Cellulosefasern, Alginatfasern, Caseinfasern, und anorganische Fasern wie Glasfasern, Basalt, Carbonfasern und Metallfasern bzw. Drähte.

Die Behandlung der Fasern kann bei den unterschiedlichsten Verarbeitungsstufen erfolgen. Möglich ist beispielsweise eine Behandlung im Rahmen der Faserherstellung oder Fasernachbehandlung. Ebenso kann eine Faserbehandlung in späteren Prozessen im Rahmen der textilchemischen Bearbeitung erfolgen. Durch den Auftrag auf Faserebene kann eine vollständige Beschichtung erreicht werden, da eine optimale Zugänglichkeit der Faseroberfläche gewährleistet ist. Eine Behandlung von Zwischenstufen und Endprodukte bei der Herstellung von Fäden, z.B. eine Behandlung von Garnen und dergleichen ist ebenfalls möglich.

Der Auftrag der erfindungsgemäß eingesetzten Zusammensetzung kann dabei aus wässrigen oder organischen Phasen in Form von Lösungen oder Emulsionen/Dispersionen erfolgen. Auch ein Auftrag durch Sprühtechniken ist möglich. Die Polymerisation kann beispielsweise durch Temperaturerhöhung während des Trocknungsprozesses oder durch UV-Behandlung erfolgen.

Ferner kann es sich bei dem Artikel beispielsweise um einen Ski, oder analoge Lauf- und Gleitflächen für Schnee- und Eisunterlagen handeln, deren Lauffläche oder Oberseite im Rahmen eines erfindungsgemäßen Verfahrens beschichtet wurde. Die Beschichtung kann hierbei als Haftvermittler für insbesondere Fluorwachse dienen. Auch ohne die Anwendung eines Fluorwachses wird aber der Reibungswiderstand des beschichteten Materials gegenüber dem unbeschichteten Substrat stark verringert. Amphiphobe Beschichtungen, die nicht die Gleitflächen betreffen, dienen z.B. auch zur Abweisung von anhaftendem Schnee.

Bei dem Artikel kann es sich auch um Nanopartikel handeln. Die beschichteten Nanopartikel können dann ihrerseits an eine Oberfläche angelagert oder gebunden werden bzw. in eine Zusammensetzung, beispielsweise in eine wachsartige Zusammensetzung eingemischt werden, um amphiphobe Oberflächen oder Zusammensetzungen zu erhalten. Eine beispielhafte Anwendung umfasst Skiwachs.

Generell sind Polymere, wobei zumindest ein Teil der repetitiven Einheiten auf die funktionalisierten Monomere der erfindungsgemäß eingesetzten vernetzbaren Zusammensetzung zurückgeht, als Skiwachs denkbar.

Generell können Oberflächen diverser Gegenstände beschichtet werden. Die Beschichtung dient als hydrophober und oleophober Lack und ist ausgesprochen schmutzabweisend. Denkbar sind superhydrophobe Anti-Graffiti Beschichtungen oder Anti-Fouling Beschichtungen. Ferner ist die Beschichtung nicht brennbar, sodass feuerfeste Beschichtungen realisierbar sind.

Des Weiteren betrifft die Erfindung vor dem eingangs genannten Hintergrund einen beschichteten Artikel, der durch ein erfindungsgemäßes Verfahren hergestellt wurde.

Die Beschichtung kann auf ein-, zwei- oder dreidimensionale Objekte aufgebracht werden oder selbst ein-, zwei- oder dreidimensionale Objekte bilden.

Mit der erfindungsgemäß hergestellten Beschichtung kann ein Kontaktwinkel für Wasser von über 90° und für Diiodmethan von über 70° erreicht werden. Je nach Oberfläche und gewähltem System sind sogar Kontaktwinkel von über 150° möglich.

Weitere Einzelheiten und Vorteile der Erfindung ergeben sich aus den Figuren und nachfolgend beschriebenen Ausführungsbeispielen. In den Figuren zeigen:
- Figur 1:: ein Beispiel eines bevorzugten funktionalisierten Monomers ohne zusätzliche Thioether-Funktionalisierung;
- Figur 2:: ein Beispiel eines bevorzugten funktionalisierten Monomers mit zusätzlicher Thioether-Funktionalisierung und einer anionischen Gruppe am Thioether;
- Figur 3:: Beispiele bevorzugter funktionalisierter Monomere mit zusätzlicher Thioether-Funktionalisierung und vernetzbaren Funktionalitäten am Thioether;
- Figur 4:: eine Darstellung einer Reaktion zur Bildung funktionalisierter Monomere mit zusätzlicher Thioether-Funktionalisierung aus einem Vorläufer mit Thion-Funktionalisierung;
- Figur 5:: Kristallstrukturen des in der Reaktion gemäß Figur 4 verwendeten Thion-Monomers;
- Figur 6:: ein Beispiel eines funktionalisierten Monomers mit einem Sigma-Komplex Anion;
- Figur 7:: Kristallstrukturen des Komplexes gemäß Figur 6;
- Figur 8:: das Messergebnis für die Partikelgrößenverteilung beschichteter Nanopartikel gemäß Beispiel 2;
- Figur 9:: Molekül-Struktur eines difluorierten funktionalisierten Monomers;
- Figur 10:: eine Abbildung einer gemäß Beispiel 17 hergestellten erfindungsgemäßen Beschichtung, die öl- und wasserabweisend ist;
- Figur 11:: eine Abbildung einer gemäß Beispiel 10 beschichteten Baumwolle; und
- Figur 12:: mikroskopische Abbildungen einer gemäß Beispiel 23 erhaltenen Beschichtung.

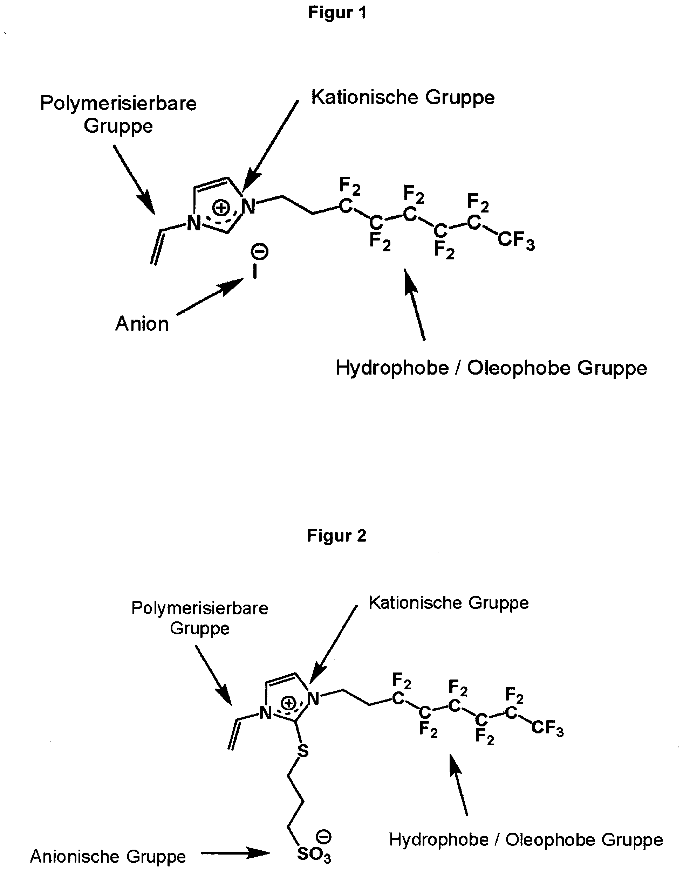

Ein im Rahmen der vorliegenden Erfindung besonders bevorzugtes funktionalisiertes Monomer ist in Figur 1 mit lodid als Gegenion dargestellt. Dieses Monomer ist in polaren organischen Lösungsmitteln löslich, lässt sich gut polymerisieren und bildet nach einer Filmpolymerisation eine polymere Beschichtung mit ausgezeichneten hydrophoben und oleophoben Eigenschaften, die gut am Substrat haftet, insbesondere wenn die Oberfläche des Substrats negativ geladen oder polarisiert ist.

Ein weiteres besonders bevorzugtes funktionalisiertes Monomer ist in Figur 2 dargestellt. Die an das Monomer gebundene anionische Gruppe kann gegenüber freien Anionen in manchen Ausführungsformen vorteilhaft sein. Denn es weist eine gute Löslichkeit in polaren Lösungsmitteln auf und besitzt zudem durch seine zwei geladenen Gruppen und die Fluoroalkylgruppe eine sehr ausgeprägte Tensidwirkung. Es kann auch im Polymer vernetzt werden, was zu einer erhöhten Biokompatibilität führt, da keine Tenside aus dem Polymer gelöst werden können. Generelle bevorzugte Eigenschaften von zwitterionischen Beschichtungen werden von Schlenoff in Langmuir 2014, 30, 9625-9636 beschrieben.

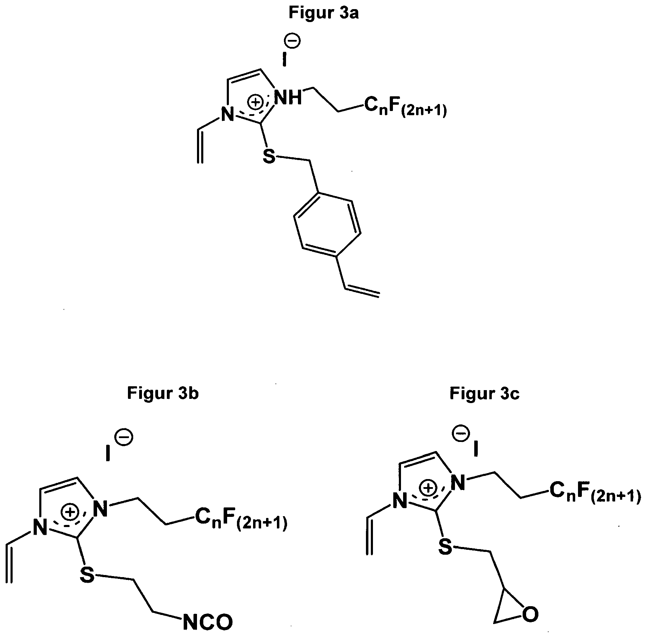

Beispiele bevorzugter Anionen mit zusätzlicher Thioether-Funktionalisierung und vernetzbaren Funktionalitäten an der Thioether-Gruppe sind in Figur 3 dargestellt. Diese Monomere tragen wenigstens zwei vernetzbare Gruppen und können daher als Quervernetzer dienen. Sofern, wie in Figur 3a gezeigt, die Thioether-Gruppe eine weitere ethylenische vernetzbare Gruppen umfasst, kann eine Quervernetzung gleichartiger Polymerketten erfolgen. Wird eine nicht-ethylenische vernetzbare Gruppe gewählt, wie Figuren 3b und 3c gezeigt, so können die so funktionalisierten Monomere unterschiedliche Polymerklassen als Crosslinker miteinander verbinden. Beispielsweise kann die Isocyanat-Gruppe der Figur 3b durch eine katalytische Polymerisationsreaktion mit alkoholischen Gruppen in eine Polyurethankette integriert werden. Die Epoxy-Gruppe der Figur 3c kann, wie auch die ethylenisch vernetzbare Gruppe, radikalisch oder durch Addition eines Nukleophils vernetzt werden.

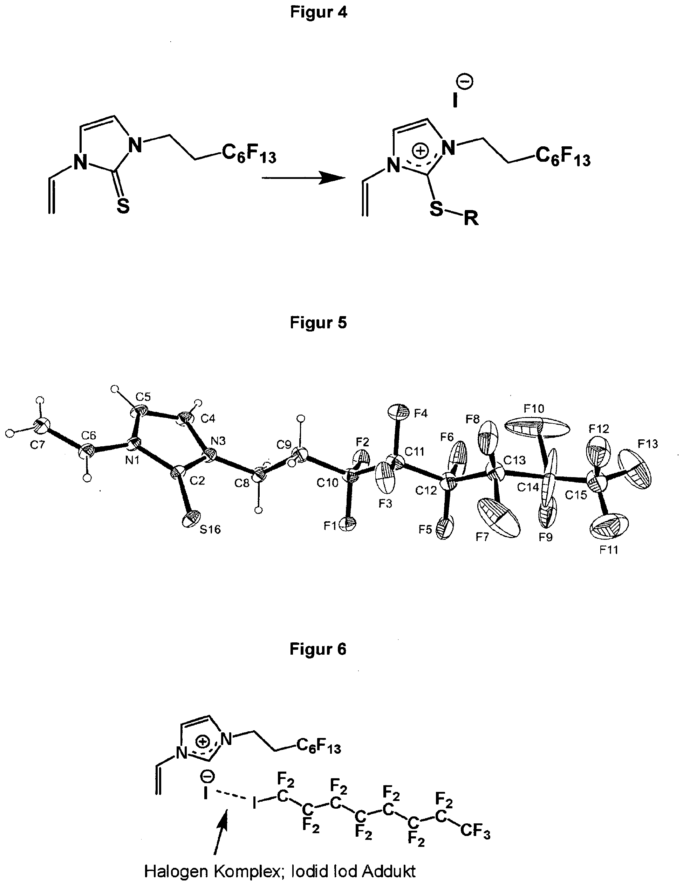

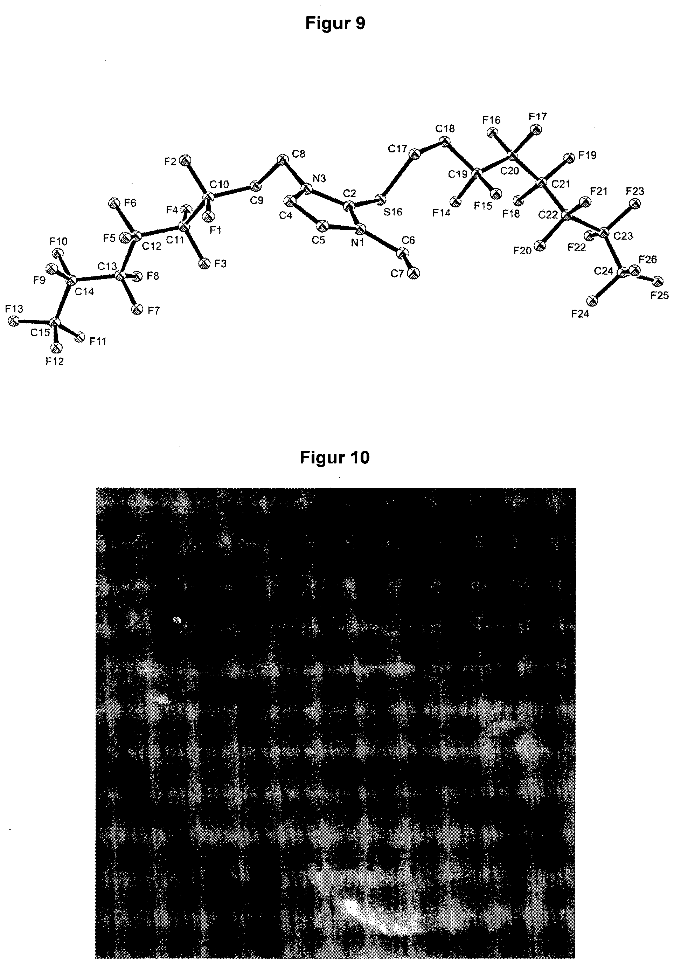

Die Thioethergruppe kann durch Substitutionsreaktion aus einer Thiongruppe und beispielsweise einem halogenierten Kohlenwasserstoff erhalten werden. Figur 4 stellt eine derartige Reaktion schematisch dar. Diese Reaktion ist einfach und hat typischerweise eine befriedigende bis gute Ausbeute. Figur 5 zeigt eine Kristallstruktur des in der Reaktion gemäß Figur 4 verwendeten Thion-Monomers. Figur 9 zeigt eine Molekül-Struktur eines beispielhaften difluorierten funktionalisierten Monomers.

Figur 6 zeigt ein Beispiel eines funktionalisierten Monomers mit einem Halogen- bzw. Sigma-Komplex-Anion. Das Anion wird durch die Delokalisierung von Ladung über ein lodid-Anion und das lod-Atom eines fluorierten lodalkans gebildet. Durch die Delokalisierung der negativen Ladung im Anion wird Elektronendichte aus der kationischen Gruppe der funktionalisierten Monomere abgezogen und durch die Funktionalisierung des lodalkans mit der Perfluoroalkylgruppe wird der hydrophobe und oleophobe Effekt des Systems signifikant gesteigert.

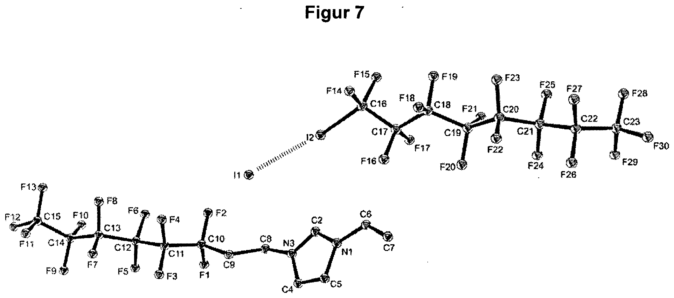

Die Molekülstruktur aus einer Einkristall-Röntgenstrukturanalyse dieses Komplexes ist in Figur 7 gezeigt.

### Beispiel 1:

### 3-(1H,1H,2H,2H perfluorooctyl)-1-vinyl-1H-imidazoliumiodid

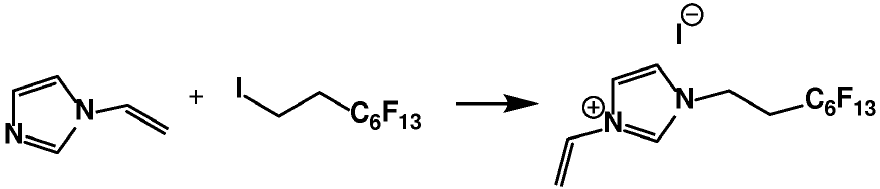

18,9 g (200 mmol) Vinylimidazol und 31,7 g (66,8 mmol) 1H,1H,2H,2H-Perfluorooctyliodid wurden in 70 ml Acetonitril für 48 Stunden rückflussgekocht, dann nach Abkühlen der Reaktionslösung mit 300 ml Diethylether versetzt und für 18 Stunden bei -20°C aufbewahrt. Der erhaltene Feststoff wurde abfiltriert, mit insgesamt 300 ml Diethylether gewaschen und im Hochvakuum getrocknet.

Ausbeute: 32,84 g (86% d. Th.)
¹³C NMR (75 MHz, CD₃OD) δ 137.25 (s, C(2)), 129.76 (s, C(6)), 124.67 (s, C(5)), 121.11 (s, C(4)), 110.55 (s, C(7)), 126-100 (m, Perfluorohexyl), 43.48 (t, C(8)), 31.94 (t, C(9)).

¹H NMR (300 MHz, CD₃OD) δ 9.53 (1H, t, C(2)H Imidazol), 8.09 (1H, t, C(5)H Imidazol), 7.94 (1H, t, C(4)H Imidazol), 7.31 (1H, dd, C(6)H Vinyl), 5.98 (1H, dd, C(7)H₂ Vinyl), 5.53, (1H, dd, C(7)H₂ Vinyl), 4.74 (2H, t, C(8)H₂-N), 3.10 (2H, tt, C(9)H₂-CF₂).

Unter Verwendung des Monomers gemäß Beispiel 1 wurde eine vernetzbare Zusammensetzung wie folgt hergestellt:
500 µl Diethylacrylamid (65,79 Gew.-%), 150 µg des Monomers gemäß Beispiel 1 (19,74 Gew.-%), 100 µl Trimethylolpropantriacrylat (13,16 Gew.-%) und 10 µl 2-Hydroxy-2-methylpropiophenon (1,32 Gew.-%) wurden in einem kleinen Reagenzglas gemischt und für 10 Minuten im Ultraschallbad gehalten. Es entstand eine homogene gelbe Lösung.

Ein Teil der Lösung wurde zwischen 2 PET-Folien mit silikonsierter Innenseite und einem Abstandshalter von 75µm aufgetragen.

Anschließend wurden beide Filme mit einer 365 UV LED Lampe bei 2W/cm² für 30 Sekunden polymerisiert.

Die Charakterisierung erfolgte anhand eines IR-Spektrums.

Für die Aufnahme des IR-Spektrums wurde der Polymerfilm in flüssigem Stickstoff gefroren und gleichzeitigt gemörsert. Von dem erhaltenen Pulver wurde ein IR Spektrum aufgenommen. Dabei wurden die charakteristischen C-F Banden bei 1237cm⁻¹, 1213cm⁻¹ identifiziert. Ebenfalls wurden die C-O Schwingungen der beiden Acrylate erkannt.

### Beispiel 2:

### Co-Kristall mit 1-lodoperfluorooctan:

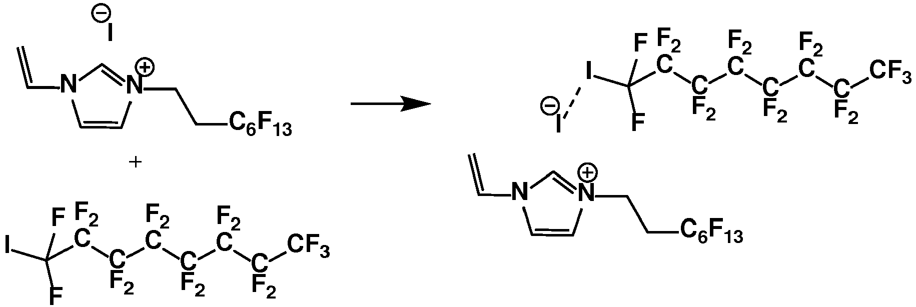

17,04 g (30,0 mmol) 3-(1H,1H,2H,2H perfluorooctyl)-1-vinyl-1 H-imidazoliumiodid wurden in 50 ml MeOH gelöst. Anschließend wurden 16,38 g (30,0 mmol) lodoperfluorooctan zugetropft und die entstandene Reaktionsmischung für 5 Minuten bei Raumtemperatur gerührt. Nach Ablauf der Zeit wurde das Lösungsmittel am Rotionsverdampfer entfernt. Der Erfolg der Synthese wurde einerseits anhand der Löslichkeit und andererseits anhand der Kristallstruktur bewiesen.

Zur Bestimmung der Löslichkeit wurden gesättigte Lösungen der angegebenen Verbindungen in den jeweiligen Lösungsmitteln hergestellt und anschließend mittels Zentrifuge der Feststoff abgetrennt. Danach wurde das Lösungsmittel am Rotationsverdampfer abgetrennt und der Feststoffrückstand gewogen. Die Ergebnisse sind in Tabelle 1 zusammengefasst:

**Tabelle 1:**

| | Lösungsmittel | Löslichkeit [g/L] |
|---|---|---|
| 3-(1 H,1H,2H,2H-perfluorooctyl)-1-vinyl-1H-imidazoliumiodid | 3M™ Novec™ 71 IPA | 8 |
| 3-(1 H,1H,2H,2H-perfluorooctyl)-1-vinyl-1H-imidazoliumiodid Co-Kristall mit 1-lodoperfluorooctan | 3M™ Novec™ 71 IPA | 500 |
| 3-(1H,1H,2H,2H-perfluorooctyl)-1-vinyl-1H-imidazoliumiodid | 3M™ Novec™ 7500 + 4 Gew.-% Propan-2-ol | 6 |
| 3-(1H,1H,2H,2H-perfluorooctyl)-1-vinyl-1H-imidazoliumiodid Co-Kristall mit 1-lodoperfluorooctan | 3M™ Novec™ 7500 + 4 Gew.-% Propan-2-ol | 53 |

Eine Steigerung der Löslichkeit aufgrund der Halogen Komplexbildung ist deutlich zu erkennen.

Die Kristallstruktur des 3-(1H,1H,2H,2H-perfluorooctyl)-1-vinyl-1H-imidazoliumiodid mit lodid als Anion ist in Figur 7 gezeigt, wobei ein Halogenkomplex mit 1-lodoperflurooctan erkennbar ist.

Eine Zusammensetzung umfassend diesen Co-Kristall wurde zur Beschichtung von SiO₂ Nanopartikeln verwendet.

Zu diesem Zweck wurden 5,36 g des Monomers gemäß Beispiel 2 in 3M™ Novec™ 71 IPA (25 g/55 ml) und 0,306 g Methylenbisacrylamid in 50 g Dichlormethan gelöst, anschließend wurden 2,515 g SiO₂ Nanopartikel (porös, 5-15 nm) zugegeben. Die Suspension wurde für 2 Stunden im Ultraschallbad gehalten, anschließend das Dichlormethan am Rotationsverdampfer entfernt und 2,064 g der leicht gelblichen Partikel entnommen. Danach wurden 50 ml 3M™ Novec™ 7500 (Hydrofluorether) zugegeben und die Suspension erneut für 10 Minuten im Ultraschallbad gehalten; zusätzlich wurden 0,1 g Darocur 1173 zugegeben. Danach folgte eine 15-minütige Bestrahlung der Suspension unter Rührung. Dabei wurde eine 365 nm LED-UV Lampe (Phoseon FJ100) bei ca. 1 W/cm² verwendet.

Die erhaltenen Partikel hatten ein eindeutiges Maximum der Partikelgröße bei 11,9 µm und eine gemittelte Partikelgröße von 29,4 µm. Diese bildeten in einem Fluorhaltigen Lösungsmittel eine stabile Suspension, welche über 1 Tag stabil blieb ohne sich abzusetzen.

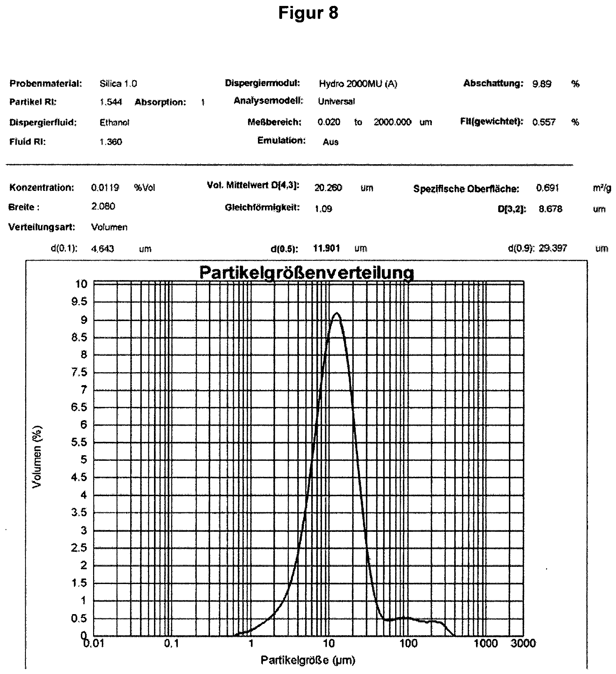

Das Messergebnis der Partikelgrößenverteilung ist in Figur 8 dargestellt.

Die beschriebene Nanopartikelsuspension in 3M™ Novec™ 7500 wurden mit Hilfe einer Sprühflasche auf einen Ski aufgetragen, welcher mit einem ebenfalls erfindungsgemäßen Polymerfilm beschichtetet war. Nach einigen Minuten entstand ein weißer Film auf dem Ski. Dieser wurde mit einer Bürste entfernt, bis kein weißer Rückstand mehr erkennbar war. Durch diese Methode konnten die Gleiteigenschaften des Skis deutlich verändert werden.

### Beispiel 3:

### Synthese von 3-(1H,1H,2H,2H-perfluorooctyl)-1-vinyl-1H-imidazolium 3H-perfluoro-3-((3-methoxy-propoxy)propanoat

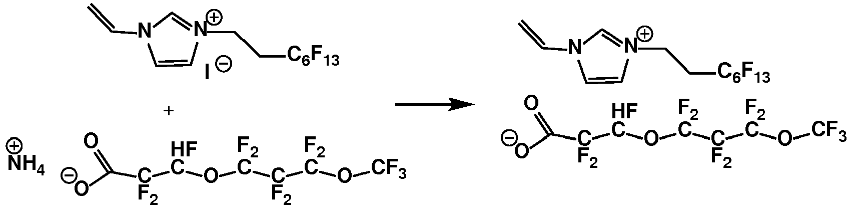

2,27 g (4 mmol) 3-(1 H,1 H,2H,2H-perfluorooctyl)-1-vinyl-1 H-imidazoliumiodid wurde vorgelegt und mit 4 ml Wasser und 25 ml Dichlormethan versetzt, dann wurden 5,3 g 3H-perfluoro-3-((3-methoxy-propoxy)propansäure) Ammoniumsalz 30% in Wasser (4 mmol) zugetropft und die resultierende Reaktionsmischung über Nacht bei 25 °C gerührt. Anschließend wurden 20 ml 3MTM Novec™ 7200 zugegeben und das Gemisch kurz geschüttelt, um den entstandenen Niederschlag zur Lösung zu bringen. Die organische/fluororganische Phase wurde von der wässrigen abgetrennt und über Na₂SO₄ getrocknet, das Lösungsmittelgemisch schlussendlich im Rotavapor entfernt und das erhaltene Produkt (ein farbloses Öl, das mit der Zeit fest wird) im Hochvakuum über Nacht getrocknet. 2,92 g (89% d.Th.) konnten so erhalten werden.

¹³C NMR (75 MHz, CD₃CN) δ 164.68 (t, Carboxyl-C DONA), 138.26 (s, C(2)), 130.23 (s, C(6)), 125.07 (s, C(5)), 121.23 (s, C(4)), 110.29 (s, C(7)), 126-100 (m, Perfluorohexyl), 43.60 (s, C(8)), 32.34 (s, C(9)).

¹H NMR (300 MHz, CD₃CN) δ 10.10 (1H, s, C(2)H Imidazol), 8.05 (1H, s (br), C(5)H Imidazol), 7.93 (1H, s (br), C(4)H Imidazol), 7.35 (1H, dd, C(6)H Vinyl), 6.55 (1H, ddd, CHF DONA), 5.98 (1H, dd, C(7)H₂ Vinyl), 5.35 (1H, dd, C(7)H₂ Vinyl), 4.74 (2H, t, C(8)H₂-N), 2.97 (2H, tt, C(9)H₂-CF₂).

### Beispiel 4:

### Synthese von 3-(1H,1H,2H,2H-perfluorooctyl)-1-vinyl-1,3-dihydro-2H-imidazol-2-thion

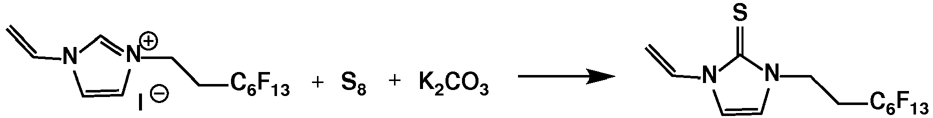

14 g (24,6 mmol) 3-(1H,1H,2H,2H-perfluorooctyl)-1-vinyl-1H-imidazoliumiodid, 0,79 g (24,6 mmol) Schwefel und 3,40 g (24,6 mmol) Kaliumcarbonat wurden in einem 250 ml Rundkolben vorgelegt und mit 50 ml Methanol versetzt. Die Reaktionsmischung wurde für 3 Stunden refluxiert. Anschließend wurde 3-mal mit jeweils 150 ml Diethylether extrahiert. Die vereinigten Etherphasen wurden am Rotationsverdampfer vom Lösungsmittel befreit, es wurden 11,5 g an Produkt erhalten (99% d.Th.). Der Schmelzpunkt des Produktes betrug 93°C.

¹³C NMR (75 MHz, CDCl₃) δ 163.42 (s, C(2)), 130.26 (s, C(6)), 118.55 (s, C(4)), 112.82 (s, C(5)), 126-100 (m, Perfluorohexyl), 101.36 (s, C(7)), 40.46 (t, C(8)), 29,63 (t, C(9)).

¹H NMR (300 MHz, CDCl₃) δ 7.53 (1H, dd, C(6)H Vinyl), 6.99 (1H, d, C(5)H Imidazol), 6.75 (1H, d, C(4)H Imidazol), 5.16 (1H, dd, C(7)H₂ Vinyl), 4.96 (1H, dd, C(7)H₂ Vinyl), 4.36 (2H, t, C(8)H₂-N), 2.70 (2H, tt, C(9)H₂-CF₂).

### Beispiel 5:

### Synthese von 3-((3-(1H,1H,2H,2H-perfluorooctyl)-1-vinyl-1H-imidazolium-2-yl)thio)propan-1-sulfonat

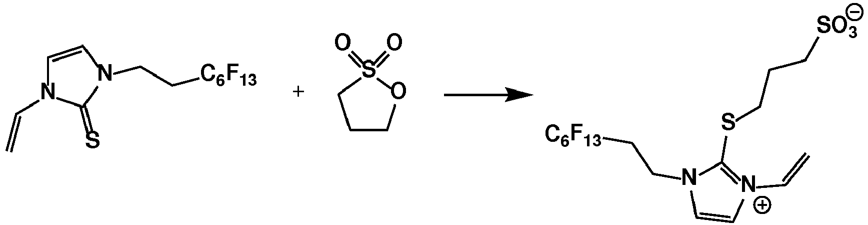

15 g (31,76 mmol) 3-(1H,1 H,2H,2H-perfluorooctyl)-1-vinyl-1,3-dihydro-2H-imidazol-2-thion und 4,27 g (35 mmol) Propansulton wurden in 50 ml Acetonitril gelöst und für etwa 20 Stunden refluxiert. Beim Abkühlen wurde die Lösung bereits milchig, die anschließende Zugabe von 300 ml Diethylether präzipitierte das Produkt als äußerst klebrigen gelben Feststoff; der Ansatz wurde noch für 6 Stunden bei -32°C aufbewahrt, um die Präzipitation zu komplettieren. Der Diethylether wurde nach der Kühlphase abdekantiert, der Rückstand in möglichst wenig Ethanol gelöst; anschließend wurde das Produkt nochmals mit 300 ml Diethylether aus der ethanolischen Lösung präzipitiert. Dieses ölte wieder aus und wurde im Gefrierschrank langsam fest. Nachdem das Produkt fest geworden war, wurde die flüssige Phase wieder abdekantiert, anschließend wurde das Produkt über Nacht im Hochvakuum getrocknet. Es ergaben sich so 12,50 g an beinahe weißem Produkt (66% d.Th.).

¹³C NMR (75 MHz, CD₃OD) δ 141.82 (s, C(2)), 129.65 (s, C(6)), 126.29 (s, C(5)), 122.65 (s, C(4)), 112.67 (s, C(7)), 126-100 (m, Perfluorohexyl), 50.23 (s, C(19)), 43.13 (t, C(8)), 36.50 (s, C(17)), 31.65 (t, C(9)), 26.98 (s, C(18)).

¹H NMR (300 MHz, CD₃OD) δ 8.36 (1H, d, C(5)H Imidazol), 8.17 (1H, d, C(4)H Imidazol), 7.62 (1H, dd, C(6)H Vinyl), 6.11 (1H, dd, C(7)H₂ Vinyl), 5.69 (1H, dd, C(7)H₂ Vinyl), 4.88 (2H, t, C(8)H₂-N), 3.36 (2H, t, C(17)H₂-S), 3.06 (2H, tt, C(9)H₂-CF₂), 2.96 (2H, t, C(19)H₂-SO₃⁻), 2.14 (2H, quin, C(18)H₂).

### Beispiel 6:

### Synthese von 3,3'-(hexan-1,6-diyl)bis(2-((1H,1H,2H,2H-perfluorooctyl)thio)-1-vinyl-1H-imidazolium) diiodid

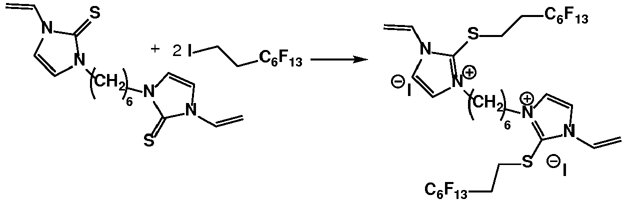

1,25 g (3,74 mmol) 3,3'-(Hexan-1,6-diyl)bis(3-vinylimidazol-2-thion) und 7,11 g (15,0 mmol) 1H,1H,2H,2H-Perfluorooctyliodid wurden in 30 ml Acetonitril gelöst und für 72 h refluxiert. Anschließend wurden zur Präzipitationseinleitung 300 ml Diethylether zugegeben, die Reaktionsmischung dann für 6 Stunden in den Gefrierschrank bei -32°C gegeben. Der Feststoff wurde abfiltriert, 4-mal mit 30 ml Diethylether gewaschen und dann über Nacht im Hochvakuum getrocknet. Isoliert wurden 3,50 g an gelblichem Pulver (73% d.Th.). Laut ¹H-NMR befinden sich noch etwa 5-10% Dithion-Edukt im Produkt, auf eine weitere Aufreinigung wurde aber verzichtet.

¹³C NMR (75 MHz, DMSO-d6) δ 138.14 (s, C(2), 128.57 (s, C(6)), 125.07 (s, C(5)), 120.88 (s, C(4)), 110.52 (s, C(7)), 126-100 (m, Perfluorohexyl), 49.02 (s, C(8)), 30.39 (t, C(13)), 28.92 (t, C(12)), 27.18 (s, C(9)), 25.04 (s, C(10)).

¹H NMR (300 MHz, DMSO-d6), δ 8.53 (2H, d, C(5)H Imidazol), 8.25 (2H, d, C(4)H Imidazol), 7.51 (2H, dd, C(6)H Vinyl), 6.07 (2H, dd, C(7)H₂ Vinyl), 5.54 (2H, dd, C(7)H₂ Vinyl), 4.30 (4H, t, C(8)H₂-N), 3.27 (4H, t, C(12)H₂-S), 2.72 (4H, tt, C(13)H₂-CF₂), 1.82 (4H, quin, C(9)H₂ Alkyl), 1.39 (4H, t, C(10)H₂ Alkyl).

Bemerkenswert an der Reaktion ist, dass in anderen Lösungsmitteln die Vinylgruppe komplett entfernt werden kann. Dies wurde bei verschiedenen Alkylierungen am Thion bemerkt. Diese Nebenreaktion kann gezielt für eine alternative Funktionalisierung genutzt werden.

### Beispiel 7:

### Synthese von 3-(1H,1H,2H,2H-perfluorooctyl)-2-((1H,1H,2H,2H-perfluorooctyl)thio)-1-vinyl-1H-imidazoliumiodid

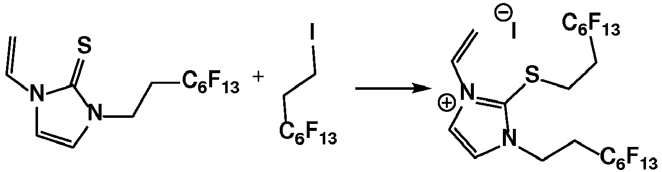

1 g (2,12 mmol) 3-(1H,1H,2H,2H-perfluorooctyl)-1-vinyl-1,3-dihydro-2H-imidazol-2-thion und 1 g (2,12 mmol) 1H,1 H,2H,2H-Perfluorooctyliodid wurden in 5 ml Acetonitril gelöst und für etwa 20 h refluxiert. Anschließend wurde die abgekühlte Reaktionsmischung mit 50 ml Diethylether versetzt, um das Produkt komplett zu präzipitieren. Dieses wurde abfiltriert und 3-mal mit je 30 ml Diethylether gewaschen, dann im Hochvakuum getrocknet. So ergaben sich 1,02 g (50% d. Th.) an weißem Pulver.

Die Aufnahme des ¹H-NMR-Spektrums erfolgte als Perfluorooctyliodid-Addukt, da das reine Produkt in konventionellen Lösungsmitteln sehr schwer löslich ist.

¹H NMR (300 MHz, Aceton-d6), δ 8.49 (1H, d, C(5)H Imidazol), 8.37 (1H, d, C(4) Imidazol), 7.75 (1H, dd, C(6)H Vinyl), 6.20 (1H, dd, C(7)H₂ Vinyl), 5.71 (1H, dd, C(7)H₂ Vinyl), 5.07 (2H, t, C(8)H₂-N), 3.61 (2H, t, C(17)H₂-S), 3.20 (2H, tt, C(9)H₂-CF₂), 2.89 (2H, tt, C(18)H₂-CF₂).

### Beispiel 8:

### Synthese von 3-(1H,1H,2H,2H-perfluorooctyl)-1-vinyl-1H-imidazolium3-(2-thioxo-3-(1H,1H,2H,2H-perfluorooctyl)-2,3-dihydro-1H-imidazol-1-yl)propan-1-sulfonat

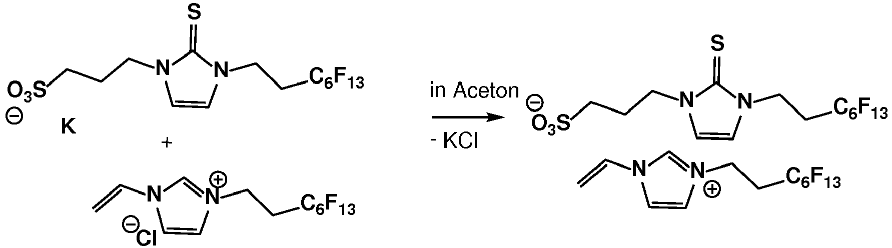

0,157 g (0,33 mmol) 3-(1 H,1 H,2H,2H-perfluorooctyl)-1-vinyl-1 H-imidazoliumchlorid und 0,200 g (0,33 mmol) Kalium 3-(2-thioxo-3-(1H,1 H,2H,2H-perfluorooctyl)-2,3-dihydro-1H-imidazol-1-yl)propan-1-sulfonat wurden in 10 ml Aceton über Nacht bei Raumtemperatur gerührt, anschließend das entstandene KCI abfiltriert und das Aceton mit einem Rotationsverdampfer entfernt. Der Umsatz ist quantitativ, isoliert wurden 263 mg (79% d.Th.).

¹H NMR (300 MHz, Aceton-d6), δ 9.86 (1H, t, C(2)H Imidazol), 8.28 (1H, t, C(5)H Imidazol), 8.12 (1H, t, C(4)H Imidazol), 7.43 (1H, dd, C(6)H Vinyl), 7.22 (1H, t, C(20)H Imidazol), 7.21 (1H, t, C(19)H Imidazol), 6.05 (1H, dt, C(7)H₂ Vinyl), 5.55 (1H, dt, C(7)H₂ Vinyl), 4.75 (2H, t, C(8)H₂-N), 4.35 (2H, t, C(21)H₂-N), 4.13 (2H, t, C(28)H₂-N), 3.25 (2H, s (br), C(30)H₂-SO₃⁻), 3.13 (2H, tt, C(9)H₂-CF₂), 2.81 (2H, tt, C(22)H₂-CF₂), 2.48 (2H, quin, C(29)H₂).

### Beispiel 9: Synthese von 3-(1H,1 H,2H,2H-perfluorooctyl)-1-vinyl-1 H-imidazolium Acid Blue 215

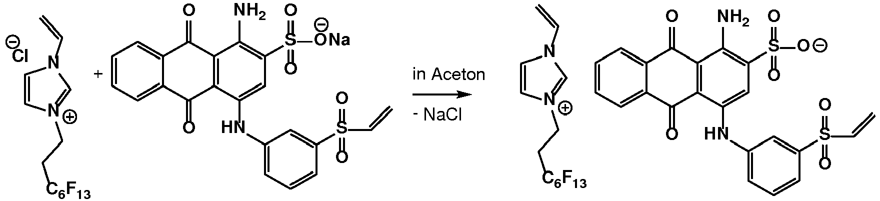

0,600 g (1,18 mmol) Acid Blue 215, Natriumsalz und 0,562 g (1,18 mmol) 1-(1H,1H,2H,2H-perfluorooctyl)-3-vinyl-1H-imidazoliumchlorid wurden in 20 ml Aceton über Nacht bei Raumtemperatur gerührt, anschließend das entstandene NaCl abfiltriert und das Aceton mit einem Rotationsverdampfer entfernt. Der Umsatz ist quantitativ, isoliert wurden 973 mg (1,05 mmol, 89% d.Th.).

¹H NMR (300 MHz, Aceton-d6), δ 12.00 (1H, s, NH sek. Amin), 9.75 (1H, s, C(2)H Imidazol), 8.28, 7.78 & 7.63 (9H, m, CH aromatisch), 8.15 (1H, s, C(5)H Imidazol), 8.06 (1H, s, C(4)H Imidazol), 7.41 (1H, dd, C(6)H Vinyl), 7.03 (1H, dd, CH Vinylsulfon), 6.43 (1H, dd, CH₂ Vinylsulfon), 6.19 (1H, dd, CH₂ Vinylsulfon), 6.00 (1H, dd, C(7)H₂ Vinyl), 5.43 (1H, dd, C(7)H₂ Vinyl), 4.89 (2H, t, C(8)H₂-N), 3.25 (2H, s(br), NH₂), 3.17 (2H, tt, C(9)H₂-CF₂).

### Beispiel 10:

### Herstellung von hydrophober und oleophober Baumwolle:

Ein Baumwoll-Gewebe mit der Größe 18x45cm und einem Gewicht von 10,53g wurde mit 1,3 Liter Wasser und 2,45g Netzmittel (Kiralon Jet B der Firma BASF) gewaschen. Die Anfangstemperatur betrug 77,5°C. Am Ende der Wäsche nach einer halben Stunde betrug die Temperatur noch 55,7°C.

Anschließend wurde das Textil mit warmem Leitungswasser 3mal gespült.

Danach wurde bei 95°C für 5 Minuten getrocknet. Anschließend wurde ein Stück mit den Maßen 11x10cm und 1,41g ausgeschnitten. Dieses wurde dann mit einer Pipette mit der in Tabelle 2 dargestellten Rezeptur, welche zuvor 10 Minuten im Ultraschallbad behandelt wurde, beträufelt bis das gesamte Gewebe vollkommen mit der Flüssigkeit gesättigt war.

**Tabelle 2**

| | |
|---|---|
| 3-(1 H,1H,2H,2H perfluorooctyl)-1-vinyl-1 H-imidazoliumiodid | 3,01 |
| Azobis(iosobutyronitril) | 1,00 |
| Ethanol denat. 96% | 95,95 |
| 3,3'-(hexan-1 ,6-diyl)bis(2-((1 H,1H,2H,2H-perfluorooctyl)thio)-1-vinyl-1 H-imidazolium) diiodid | 0,04 |
| | 100,00 |

Nun wurde mit einem Druck von 2bar zwischen 2 Rollen das Gewebe von der überschüssigen Flüssigkeit befreit und bei Raumtemperatur für 5 Minuten offen liegen gelassen. Anschließend wurde das Textil bei 95°C für 5 Minuten in den Trockenofen gegeben. Danach wurde 5mal mit 55°C warmem Wasser gewaschen. Danach wurde das Baumwoll-Gewebe bei 150°C für 5 Minuten in den Trockenofen gegeben.

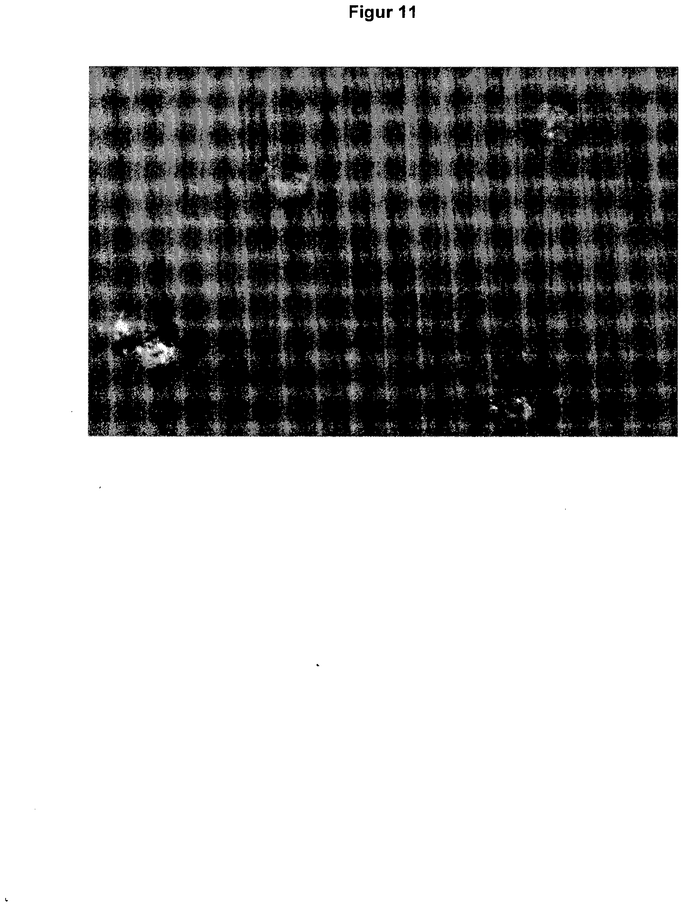

Das so behandelte Textil war nun wasser- und ölabweisend und auf diesem Material aufgebrachte Tropfen wurden selbst nach 1 Minute nicht aufgesaugt. Der Kontaktwinkel von Wasser betrug durchschnittlich 124°. Der Kontaktwinkel für Diiodmethan betrug durchschnittlich 123°. Figur 11 zeigt ein Bild von Wassertropfen auf dem Gewebe.

Es konnten auch andere Gewebe mit leicht veränderten Parametern hydrophobiert werden.

### Beispiel 11:

### Herstellung einer Beschichtung für Wintersportgeräte:

3g 3-(1H,1H,2H,2H perfluorooctyl)-1-vinyl-1H-imidazoliumiodid wurden mit 1,0g Diethylacrylamid teilweise vorgelöst und anschließend mit 1,5g Laurylacrylat versetzt. Anschließend wurden 40ml Isopropanol und 0,1g 2-Hydroxy-2-methyl-1-phenyl-1-propanon zugegeben. Diese Mischung wurde dann für 10 Minuten unter Rühren mittels einer UV-Lampe bei ca. 365nm und einer Leistung von 4W/cm² und einem Abstand von 10cm im 100ml Becherglas gerührt. Die Lösung änderte daraufhin die Farbe zu einem rot-braunen Farbton.

Anschließend wurde der Alkohol abgezogen und so das gelartige Polymer erhalten. 1,3g der so erhaltenen Polymermischung wurden mit 0,03g SiO₂-Nanopartikel 10-20nm der Firma Sigma Aldrich versetzt.

Diese so erhaltene Beschichtung für Wintersportgeräte wurde dann bei 130-150°C auf einen Langlaufski aufgebügelt.

Bei hartem grobkörnigen Kunstschnee, einer Lufttemperatur von 4°C, einer Schneetemperatur von -0,3°C und einer Schneefeuchte von 25-30% wurde das erhaltene Produkt gegen ein handelsübliches Produkt (Fluoropow Middle der Firma HWK) getestet. Der Test wurde in einem leicht abschüssigen Gelände durchgeführt. Um äußere Einflüsse auszuschließen wurde die Durchschnittszeit aus 6 Läufen ermittelt. Die Zeitnahme erfolgte mittels 2 Lichtschranken.

Das Produkt Fluoropow Middle hatte eine Zeit von 11,49 Sekunden.

Das neu hergestellte Produkt kam im Mittel auf eine Zeit von 11,45 Sekunden und war somit auf diese kurze Distanz um 0,04 Sekunden schneller.

Zudem verfügt dieses Produkt über keine schädlichen C₈F₁₇-Ketten oder längere Fluoralkane. Dies hat eine deutlich höhere Umweltverträglichkeit im Vergleich zu den herkömmlichen Produkten.

### Beispiele 12 bis 19 und Vergleichsbeispiele A bis C:

Alle in der Tabelle 3 beschriebenen Beispiele und Vergleichsbeispiele wurden in den angegeben prozentuellen Verhältnissen gemischt und anschließend kurz ins Ultraschallbad gegeben. Anschließend wurden die Filme auf eine Glasplatte aufgetragen. Auf beiden Seiten wurden Abstandhalter mit 75 µm Dicke eingefügt und dann eine PET-Folie mit der silikonisierten Seite nach unten draufgegeben. Anschließend wurde ein leichter Druck auf die PET Folie ausgeübt, damit ein homogen verteilter Film entsteht. Dann wurden die so präparierten Proben mit UV-Licht bei 365 nm für ca. 10-30 Sekunden bestrahlt.

Beispiel 12 verwendet ein funktionalisiertes Monomer gemäß Figur 1 mit einem Quervernetzer. Die Zusammensetzung enthält ferner SiO₂-Nanopartikel und Lösungsmittel. Es werden bessere Kontaktwinkel erzielt als für Vergleichsbeispiele B und C und äquivalente Werte zu dem (umwelttechnisch problematischen) Vergleichsbeispiel A.

Beispiel 13 verwendet ein funktionalisiertes Monomer mit Halogen-Komplex sowie einen Quervernetzer, SiO₂-Nanopartikel und Lösungsmittel. Es werden bessere Kontaktwinkel erzielt als für Vergleichsbeispiele B und C und sogar bessere Werte als mit dem (umwelttechnisch problematischen) Vergleichsbeispiel A.

In Beispiel 14 liegt als funktionalisiertes Monomer 3-(1 H,1 H,2H,2H-Perfluorooctyl)-1-vinyl-1H-imidazoliumbis(trifluormethansulfonyl)amid vor. Es werden bessere Kontaktwinkel erzielt als für Vergleichsbeispiele B und C.

Beispiel 15 zeigt eine Zusammensetzung ohne Partikel, die zur Oberflächenrauheit beitragen. Durch den fehlenden Lotuseffekt sind die Werte für die Kontaktwinkel niedriger als bei den verbleibenden erfindungsgemäßen Beispielen.

Beispiel 16 umfasst ein Crosslinker-Monomer gemäß Figur 3a und als Additiv eine ionische Flüssigkeit mit Fluoroketten, welche nicht polymerisierbar ist. Die Ergebnisse sind gleichsam den Vergleichsbeispielen überlegen.

Beispiele 17 und 18 umfassen funktionalisierte Monomere mit längeren Perfluoroalkylketten, wobei gute Ergebnisse erzielt werden, die langen Perfluoroalkylketten aber umwelttechnisch bedenklich sind. Die Beschichtung in Beispiel 17 befindet sich dabei auf der nicht silikonisierten Seite einer PET-Folie und nicht wie in den anderen Beispielen auf einem Glasträger. Figur 10 zeigt eine Abbildung der gemäß Beispiel 17 hergestellten Beschichtung. Dabei befinden sich oben links ein Olivenöl-Tropfen und unten rechts ein Wassertropfen.

Beispiel 19 beinhaltet ein funktionalisiertes Monomer mit einer kurzen Fluorokette, wobei ebenfalls kompetitive Resultate erreicht werden.

Vergleichsbeispiel A umfasst ein aus dem Stand der Technik bekanntes Acrylat-Monomer, welches gute Kontaktwinkel zeigt, jedoch umweltbelastend ist. Vergleichsbeispiel B umfasst ein aus dem Stand der Technik bekanntes Acrylat-Monomer mit kurzer Perfluoroalkylkette, das umweltverträglich ist aber schlechtere Werte erzielt als die erfindungsgemäßen Zusammensetzungen.

Vergleichsbeispiel C umfasst ein aus dem Stand der Technik bekanntes Vinylimidazolium ohne Fluoroseitenketten, das umweltverträglich ist aber ebenfalls schlechtere Werte erzielt als die erfindungsgemäßen Zusammensetzungen.

**Tabelle 3**

| | 12 | 13 | 14 | 15 | 16 | 17 | 18 | 19 | A | B | C |
|---|---|---|---|---|---|---|---|---|---|---|---|
| 3-(1 H,1H,2H,2H-Perfluorooctyl)-1-vinyl-1H-imidazoliumiodid | 15,7 | | | | | | | | | | |
| 2-hydroxy-2-methyl-1-phenylpropan-1-on | 5,4 | 1,7 | 2,6 | 5,6 | 2,7 | 3,6 | 3,6 | 3,1 | 2,6 | 2,4 | 3,4 |
| 3-(1 H,1H,2H,2H-Perfluorooctyl)-1-vinyl-1H-imidazoliumiodid 1-lodoperfluorooctan | | 15,3 | | | | | | | | | |
| 3M™ Novec™ 71 IPA | 43,3 | 33,9 | 44,9 | | 27,1 | 27,2 | 27,2 | 28,8 | 19,5 | | |
| Isopropanol | 27,6 | 33,9 | | | 27,1 | 45,3 | 45,3 | 28,8 | 32,5 | | 8,6 |
| 3M™ Novec™ 7500 | 27,3 | | | | | | | | | | |
| Hexandioldiacrylat 50% SiO₂ 50% (Nanocryl C140) | 11,1 | 15,3 | 12,8 | | | 9,1 | 9,1 | 19,2 | 13,0 | 50,0 | 35,0 |
| 3-(1 H,H,2H,2H-Perfluorooctyl)-1-vinyl-1H-imidazolium bis(trifluormethansulfonyl)amid | | | 39,7 | 47,4 | | | | | | | |
| 3,3'-Hexamethylenbis(1-vinylimidazolium)-di(bis(trifluormethansulfonyl)amid) | | | | 47,0 | | | | | | | |
| SiO₂ Nanopartikel mit 1-Methyl-2-((1 H1H,2H,2H-Perfluorooctyl)thio)-1H-imidazol gesättigt | | | | | 0,7 | | | | | | |
| 3-(1 H,1H,2H,2H-Perfluorooctyl)-1 -vinyl-2-((4-vinylbenzyl)thio)-1 H-imidazoliumchlorid | | | | | 13,5 | | | | | | |
| 1-methyl-2-((1,H,1H,2H,2H-Perfluorooctyl)thio)-1H-imidazolium 1,1,1,5,5,5-hexafluoro-2,4-dioxopentan-3-id | | | | | 28,9 | | | | | | |
| 3-(1 ,H,1H,2H,2H-Perfluoropentyl)-1-vinyl-1H-imidazoliumiodid | | | | | | | | 19,2 | | | |
| 3-(1,H,1H,2H,2H-Perfluorodecyl)-1-vinyl-1H-imidazoliumiodid | | | | | | 14,8 | 14,8 | | | | |
| 1 H,1H,2H,2HPerfluoroalkyl-1-methacrylate (CAS: 65530-66-7) | | | | | | | | | 32,5 | | |
| Pentafluoropropylacrylat | | | | | | | | | | 47,6 | |
| 3-octyl-1 -vinyl-1 H-imidazoliumiodid | | | | | | | | | | | 53,0 |
| Wasser Kontaktwinkel [°] | 134 | 146 | 130 | 105 | 145 | 151 | 139 | 137 | 141 | 109 | 94 |
| Diiodmethan Kontaktwinkel [°] | 126 | 136 | 114 | 90 | 147 | 144 | 126 | 130 | 124 | 76 | 55 |

### Beispiel 20:

### Messung der Oberflächenspannung von3-(1H,1H,2H,2H-Perfluorooctyl)-1-vinyl-1H-imidazoliumchlorid

Die Oberflächenspannung wurde am hängenden Tropfen mittels eines *"Drop Shape Analyser DSA 25"* der Firma Krüss bestimmt. Die Messungen wurden bei Temperaturen zwischen 23,5 und 25,0 °C und einer Luftfeuchtigkeit von ca. 15-30% durchgeführt. Die Probe wurde insgesamt 10-mal gemessen. Die Standardabweichung ist in der unten angeführten Tabelle 4 mit s gekennzeichnet.

**Tabelle 4**

| **c (w/w%)** | **OFS (mN/m)** | **s** |
|---|---|---|
| 1 | 20,58 | 0,15 |
| 0,5 | 21,94 | 0,63 |

In den angegebenen Konzentrationsbereichen führt das erfindungsgemäß eingesetzte Monomer zu einer deutlichen Reduktion der Oberflächenspannung von Wasser.

### Beispiel 21:

### Co-Polymer für Textil-Beschichtungen

Die in der untenstehenden Tabelle 5 aufgeführten Komponenten wurden gemischt. auf 80°C erhitzt und für 10 Minuten mit Ultraschall behandelt. Dabei entstand eine Emulsion.

**Tabelle 5**

| **Stoff** | **Menge** |
|---|---|
| Butylacrylat | 4,24 g |
| 3-(1 H,1H,2H,2H-perfluorooctyl)-1-vinyl-1H-imidazoliumchlorid (Reinheit >95%) | 5 g |
| 3-(1 H,1H,2H,2H-perfluorooctyl)-2-((1H,1H,2H,2H-perfluorooctyl)thio)-1-vinyl-1H-imidazoliumchlorid (Reinheit | 3,26 g |
| >95%) | |
| Wasser | 72 g |

Die entstandene Emulsion wurde mit Argon gespült. Im Anschluss wurde bei 80 °C eine Lösung von 0,20 g 2,2'-Azobis(2-methylpropionamidin)-dihydrochlorid in 2 g Wasser zugegeben. Die Reaktionsmischung wurde über Nacht bei 80°C gehalten.

Dabei bildeten sich am Boden des Reaktionsgefäßes ca. 2 g eines makroskopischen Co-Polymers, das dann mit einem Papierfilter entfernt wurde.

Die so erhaltene (Latex-)Emulsion wurde mit 20 g Wasser verdünnt, auf ein Textil aus Baumwolle aufgetragen und bei 50°C für 5 Minuten getrocknet. Anschließend wurde das Gewebe bei 150 °C für 1 Minute erhitzt.

Das so behandelte Textil wurde auf seine hydrophoben und oleophoben Eigenschaften untersucht. Es zeigten sich ausgeprägte wasserabweisende und ölabweisende Eigenschaften. Im AATCC Test 118 mit n-Dodecan wurde ein Wert von 5.5 erhalten. Der Test ist in Absatz [0038] der EP 2 057 201 B1 im Detail beschrieben.

Zusätzlich zum Textilgewebe wurde ein Papier mit der Emulsion benetzt und an Luft über Nacht getrocknet. Dabei bildete sich ein Film, welcher abweisend gegenüber Dodecan war.

### Beispiel 22:

### Co-Polymer für Textilien-Beschichtung

Die in der untenstehenden Tabelle 6aufgeführten Komponenten wurden gemischt, auf 40°C erhitzt und für 15 Minuten mit Ultraschall behandelt, um eine stabile Emulsion zu erzeugen. Während der Ultraschallbehandlung wurde ein Temperaturanstieg auf fast 60°C beobachtet.

**Tabelle 6**

| **Stoff** | **Menge** |
|---|---|
| Octadecylacrylat | 1,5 g |
| Butylacrylat | 0,5 g |
| 3-(1H,1H,2H,2H perfluorooctyl)-1-vinyl-1H-imidazoliumchlorid (Reinheit >95%) | 0,2 g |
| 3-(1 H,1H,2H,2H-perfluorooctyl)-2-((1H,1 H,2H,2H-perfluorooctyl)thio)-1-vinyl-1H-imidazoliumchlorid (Reinheit >95%) | 2 g |
| Hydroxyethylmethacrylat | 0,1 g |
| N-(Isobutoxymethyl)acrylamid | 0,11 g |
| Glycidyl methacrylat | 0,15 g |
| GenopolX080 (= Polyethylenglykolmonoalkylether der Firma Clariant) | 0,1 g |
| Diethylenglycolmonobutylether | 7,25 g |
| Wasser | 40 g |
| Dodecanthiol | 0,2 g |

Die Emulsion wurde anschließend auf 80 °C erhitzt und unter Schutzgasatmosphäre gehalten. Nach einer Stunde wurde eine Lösung aus 0,2 g 2,2'-Azobis(2-methylpropionamidin)-dihydrochlorid in 3 ml Wasser zugegeben und die resultierende Mischung für 6 Stunden bis zur vollständigen Reaktion bei 80 °C gehalten. Die erhaltene Lösung wurde mit 30 g Wasser verdünnt, um eine Produktlösung zu erhalten.

Ein Baumwollgewebe wurde mit dieser Produktlösung benetzt, bei 50 °C getrocknet und bei 150 °C für 2 Minuten fixiert. Es zeigte wasserabweisende und ölabweisende Eigenschaften.

### Beispiel 23:

### Co-Polymer für Lackanwendungen

Die in der nachfolgenden Tabelle 7 aufgeführten Komponenten wurden bei Raumtemperatur gemischt.

**Tabelle 7**

| **Stoff** | **Menge** |
|---|---|
| 2,2-dimethoxy-2-phenylacetophenon | 10 mg |
| 3-(1H,1H,2H,2H perfluorooctyl)-1-vinyl-1H-imidazoliumiodid (Reinheit >99%) | 85 mg |
| Ethylendimethacrylat | 100 µL |
| 1-Propanol | 125 µL |
| Acetonitril | 125 µL |
| Wasser | 75 µL |

Zwei Glasplatten wurden mit Triethoxyvinylsilan in 96%igem Ethanol vorbehandelt. Die Glasplatten wurden dann flächig aneinandergelegt und mit einem Abstandshalter wurde ein Abstand von 75 µm eingestellt. Mit einer Pipette wurde die Mischung gemäß Tabelle 7 zwischen die Platten eingebracht. Anschließend wurde mit einer UV-Lampe bei 365 nm gehärtet. Die beiden Platten wurden anschließend vorsichtig voneinander getrennt. Auf beiden Glasplatten bildete sich eine makroskopische Beschichtung, die wasserabweisend und ölabweisend war. Die gemessenen Kontaktwinkel der beschichteten Oberflächen betrugen sowohl für Wasser als auch für Diiodmethan und Hexadecan über 160°.

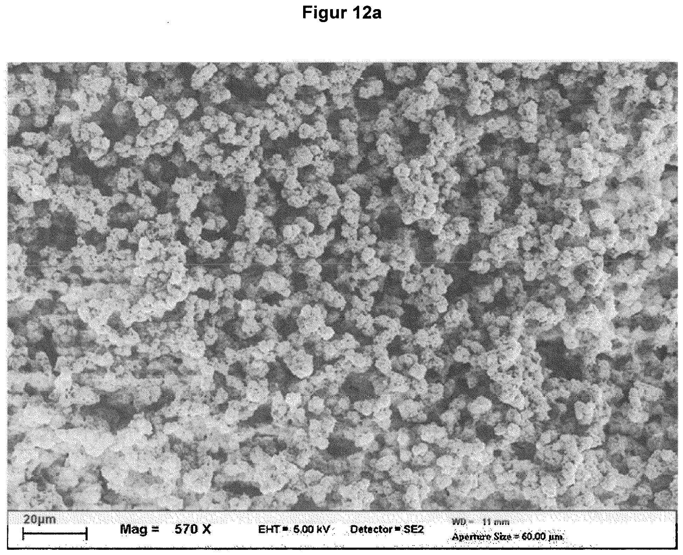

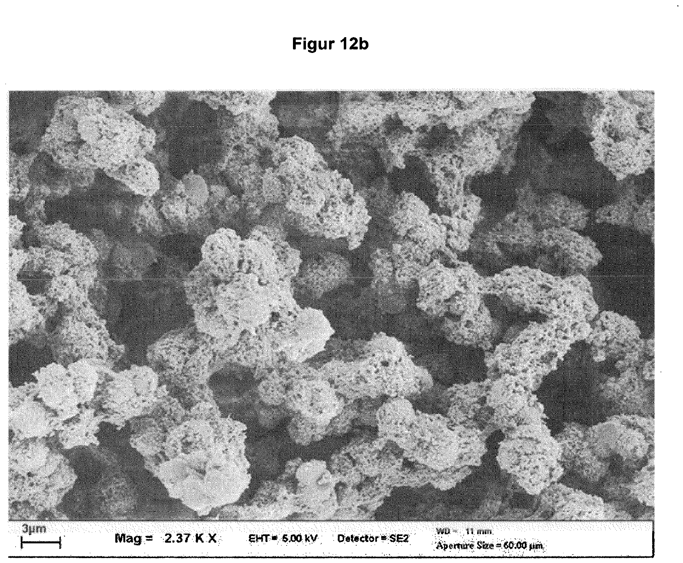

In Figuren 12a und 12b sind mikroskopische Aufnahmen der beschichteten Oberflächen gezeigt. Aufgrund der hohen Kontaktwinkel der erfindungsgemäßen Beschichtung war eine sehr raue Oberfläche zu erwarten, was anhand dieser Aufnahmen bestätigt werden konnte. Die Oberflächenrauigkeit ist ein wichtiges Merkmal superomniphober Beschichtungen. Als Vorbild aus der Natur wird oft das Lotusblatt verwendet, welches über eine raue Oberfläche verfügt, die omniphobe und mithin selbstreinigende Eigenschaften hat.

Es konnte ein Einfluss der verwendeten Lösungsmittel auf die Kontaktwinkel festgestellt werden. Das verwendete Gemisch aus 1-Propanol, Acetonitril und Wasser resultierte dabei in hohen Kontaktwinkeln und in einer hohen Oberflächenrauigkeit. Andere Gemische zeigten ähnlich gute Kontaktwinkel und Oberflächenrauigkeiten.

### Beispiel 24:

### Co-Polymer für Textil-Beschichtung

Die in der nachfolgenden Tabelle 8 angegebenen Komponenten wurden unter Inertgasatmosphäre in einem Autoklaven bei 60°C intensiv gerührt, um eine Emulsion zu erzeugen.

**Tabelle 8**

| **Stoff** | **Menge** |
|---|---|
| Stearylacrylat | 22,5 g |
| Vinylidenchlorid | 15,5 g |
| N-Methoxymethylacrylamid | 1 g |
| Hydroxyethylmethacrylat | 1 g |
| Dipropylenglykol | 30 g |
| Dodecanthiol | 0,5 g |
| Genapol X100 (Oligoethylenglykolmonoalkylether / Sigma Aldrich) | 4g |
| Hexadecyltrimethylammoniumchlorid (25%ige Lösung in Wasser) | 3,5 g |
| Wasser | 200 g |
| 1 H,1H,2H,2H-perfluorooctylmethacrylat | 40 g |
| 3-(1 H,1H,2H,2H-perfluorooctyl)-2-((1 H,1H,2H,2Hperfluorooctyl)thio)-1-vinyl-1H-imidazoliumchlorid (Reinheit >95%) | 15 g |
| 3-(1 H,1H,2H,2H-perfluorooctyl)-1-vinyl-1H-imidazoliumiodid (Reinheit >95%) | 5 g |

Zu der so erhaltenen Emulsion wurden 0,6 g 2,2'-Azobis(2-methylpropionamidin)-dihydrochlorid zugegeben. Die resultierende Reaktionslösung wurde zur Durchführung der Polymerisationsreaktion für 6 h bei 60 °C gehalten. Anschließend wurde nicht reagiertes Vinylidenchlorid abdestilliert. Der Feststoffanteil des Rückstandes betrug ca. 30%. Zur besseren Haftung am Textilgewebe wurde dem Rückstand 5 g/l eines Polyisocyanats zugegeben (Cassurit FF, Firma Archroma).

Mit der so erhaltenen Produktlösung wurde ein Textil aus Baumwolle benetzt, bei 50%C getrocknet und 1 Minute bei 150°C fixiert. Das erhaltene Textil war wasserabweisend und ölabweisend. Diese Eigenschaften wurden auch nach fünf Waschgängen noch beobachtet.

### Beispiel 25:

### Co-Polymer für Lackanwendungen

In 5 ml Ethanol wurden 0,15 g 3-(1H,1H,2H,2H-perfluorooctyl)-2-((1H,1H,2H,2H-perfluorooctyl)thio)-1-vinyl-1H-imidazoliumchlorid und 0,05 g 3-(Trimethoxysilyl)propylmethacrylat mit 0,005 g Azobisisobutyronitril unter Argonatmospäre für 6 h bei 65 °C gerührt. Anschließend wurde ein Glaskörper mit 3-(Trimethoxysilyl)propylmethacrylat vorbehandelt und sodann mit der wie oben beschrieben erhaltenen Präpolymerlösung und mit 0,005 g 2-Hydroxy-2-methylpropiophenon benetzt. Danach wurde das Präpolymer mit einer UV-Lampe bei einer Wellenlänge von 365 nm kovalent mit dem Glas verbunden.

Auch nach intensiver Reinigung zeigte das so beschichtete Glas noch hydrophobere und oleophobere Eigenschaften als unbehandeltes Glas.

### Beispiel 26:

### Hydrogel

Die in der untenstehenden Tabelle 9 gelisteten Komponenten wurden zu einer homogenen Lösung verrührt.

**Tabelle 9**

| **Stoff** | **Menge** |
|---|---|
| Hydroxyethylmethacrylat | 30 ml |
| Ethylenglycoldimethacrylat | 0,52 g |
| Wasser | 18 ml |
| 3-(1 H,1H,2H,2H perfluorooctyl)-1-vinyl-1 H-imidazoliumchlorid | 5 g |
| 2,2-dimethoxy-2-phenylacetophenon | 0,52 g |

Die so erhaltene Lösung wurde auf ein Substrat aufgebracht und mittels UV Licht bei 365 nm gehärtet. Es entstand ein transparentes Hydrogel. Diese und vergleichbare Zusammensetzungen könnten in Kontaktlinsen Anwendung finden.

## Patentansprüche

1. Verfahren zur Herstellung eines beschichteten Artikels, wobei die Oberfläche des Artikels mit einer vernetzbaren Zusammensetzung benetzt wird und die vernetzbare Zusammensetzung anschließend zu einer Beschichtung vernetzt wird, wobei die vernetzbare Zusammensetzung funktionalisierte Monomere umfasst, die eine vernetzbare Gruppe, eine kationische Gruppe und eine fluorierte Gruppe aufweisen, wobei die Zusammensetzung zu den kationischen Gruppen der funktionalisierten Monomere korrespondierende Anionen umfasst, wobei es sich bei der kationischen Gruppe um eine N-substituierte zyklische und insbesondere heteroaromatische Gruppe handelt, die einen 5-Ring und/oder wenigstens zwei Heteroatome umfasst, und wobei zwischen der kationischen Gruppe und der fluorierten Gruppe ein Spacer angeordnet ist, bei dem es sich um eine ungeladene und unfluorierte Organylgruppe und vorzugsweise um eine Alkylengruppe handelt.

2. Verfahren nach Anspruch 1, **dadurch gekennzeichnet, dass** es sich bei der kationischen Gruppe um eine N,N-disubstituierte Imidazoliumgruppe handelt.

3. Verfahren nach einem der vorhergehenden Ansprüche, **dadurch gekennzeichnet, dass** die vernetzbare Gruppe eine vernetzbare ethylenische Funktionalität umfasst, wobei es sich vorzugsweise um eine substituierte oder unsubstituierte Vinylgruppe handelt.

4. Verfahren nach einem der vorhergehenden Ansprüche, **dadurch gekennzeichnet, dass** es sich bei dem Spacer um eine vorzugsweise lineare Alkylengruppe mit 1 bis 10, vorzugsweise 1 bis 5 und weiter vorzugsweise 2 bis 3 Kohlenstoffatomen handelt.

5. Verfahren nach einem der vorhergehenden Ansprüche, **dadurch gekennzeichnet, dass** es sich bei der fluorierten Gruppe um eine vollständig fluorierte Kohlenwasserstoffgruppe handelt, vorzugsweise um eine vollständig fluorierte und gegebenenfalls lineare Gruppe vom Typ CₙF₂ₙ₊₁, wobei n zwischen 3 und 10 liegt und vorzugsweise 5, 6 oder 7 ist.

6. Verfahren nach einem der vorhergehenden Ansprüche, **dadurch gekennzeichnet, dass** das funktionalisierte Monomer ferner einen Thioether umfasst.

7. Verfahren nach Anspruch 6, **dadurch gekennzeichnet, dass** der schwefelgebundene Organylrest des Thioethers die oder eine weitere vernetzbare Gruppe trägt, wobei es sich bei der weiteren vernetzbaren Gruppe um eine vernetzbare ethylenische Funktionalität oder um eine nichtethylenische vernetzbare Gruppe, beispielsweise um eine Isocyanat-Gruppe oder eine Epoxid-Gruppe, handeln kann.

8. Verfahren nach Anspruch 6, **dadurch gekennzeichnet, dass** das funktionalisierte Monomer eine weitere Gruppe aufweist, die an den Organylrest der Organylsulfidgruppe substituiert ist oder die den schwefelgebundenen Organylrest des Thioethers darstellt, und vorzugsweise eine fluorierte, anionische und oder vernetzbare Gruppe darstellt.

9. Verfahren nach Anspruch 6, **dadurch gekennzeichnet, dass** der schwefelgebundene Organylrest des Thioethers das zu der kationischen Gruppe korrespondierende Anion trägt, wobei es sich bei dem Anion um eine an den Organylrest substituierte Sulfat-, Sulfonat-, Phosphonat-, Phosphat-, Carbonat-, Carbamat-, Triflat- oder Carboxylatgruppe, insbesondere eine Sulfonatgruppe handeln kann.

10. Verfahren nach einem der vorhergehenden Ansprüche, **dadurch gekennzeichnet, dass** zumindest ein Teil der Anionen nicht kovalent an das Copolymer gebunden sind, wobei vorzugsweise vorgesehen ist, dass es sich bei dem freien Anion um Chlorid, lodid, Bromid, Arylsulfonat, Alkylsulfonat, Alkylsulfat, Sulfat, Arylphosphonat, Alkylphosphonat, Monoalkylphosphat, Dialkylphosphat, Hydrogenphosphat, Phosphat, Hexafluorophosphat, Hydrogencarbonat, Carbonat, Carbamat, Alkylcarbonat, Trifluoromethansulfonat, Bis(trifluoromethan)sulfonamid, Nonaflat oder Carboxylat handelt.

11. Verfahren nach einem der vorhergehenden Ansprüche, **dadurch gekennzeichnet, dass** zumindest ein Teil der Anionen kovalent an das funktionalisierte Monomer gebunden ist, wobei es sich beispielsweise um eine organylgebundene Sulfat-, Sulfonat-, Phosphonat-, Phosphat-, Carbonat-, Carbamat-, Triflat- oder Carboxylatgruppe, insbesondere eine Sulfonatgruppe handelt.

12. Verfahren nach einem der vorhergehenden Ansprüche, **dadurch gekennzeichnet, dass** es sich bei wenigstens einem Teil der Anionen um ein Halogenid und vorzugsweise um lodid handelt, wobei weiter vorzugsweise vorgesehen ist, dass die Zusammensetzung ferner ein Halogenalkan umfasst, wobei das Halogenalkan vorzugsweise eine fluorierte Gruppe trägt und wobei es sich bei dem Halogenalkan vorzugsweise um ein Perfluorohalogenalkan und weiter vorzugsweise um 1-Bromoperfluorooctan oder 1-lodoperfluorohexan handelt.

13. Verfahren nach einem der vorhergehenden Ansprüche, **dadurch gekennzeichnet, dass** die Zusammensetzung zusätzliche Monomere aufweist, die wenigstens eine vernetzbare Gruppe aufweisen, jedoch nicht ferner sowohl eine kationische als auch eine fluorierte Gruppe aufweisen.

14. Zusammensetzung nach einem der vorhergehenden Ansprüche, **dadurch gekennzeichnet, dass** die Zusammensetzung ferner einen Initiator, vorzugsweise einen Photoinitiator und weiter vorzugsweise einen radikalischen Photoinitiator umfasst und/oder dass die Zusammensetzung ferner ein ionisches Additiv und vorzugsweise ionisches Lösungsmittel aufweist, das vorzugsweise kationische Verbindungen mit einer fluorierten Gruppe umfasst.

15. Beschichteter Artikel,
**dadurch gekennzeichnet,**
**dass** er durch ein Verfahren nach einem der vorhergehenden Ansprüche hergestellt wurde.

## Claims

1. A method of producing a coated article, wherein the surface of the article is wetted with a crosslinkable composition and the crosslinkable composition is then crosslinked to form a coating, wherein the crosslinkable composition comprises functionalised monomers that have a crosslinkable group, a cationic group and a fluorinated group, wherein the composition comprises anions corresponding to the cationic groups of the functionalised monomers, wherein the cationic group is an N-substituted cyclic, and in particular heteroaromatic, group that comprises a 5-membered ring and/or at least two heteroatoms, and wherein a spacer is arranged between the cationic group and the fluorinated group, said spacer being an uncharged and unfluorinated organyl group and preferably an alkylene group.

2. The method according to claim 1, **characterised in that** the cationic group is an N,N-disubstituted imidazolium group.

3. The method according to one of the preceding claims, **characterised in that** the crosslinkable group comprises a crosslinkable ethylenic functionality, said ethylenic functionality preferably being a substituted or unsubstituted vinyl group.

4. The method according to one of the preceding claims, **characterised in that** the spacer is a preferably linear alkylene group having 1 to 10, preferably 1 to 5 and more preferably 2 to 3 carbon atoms.

5. The method according to one of the preceding claims, **characterised in that** the fluorinated group is a completely fluorinated hydrocarbon group, preferably a completely fluorinated and optionally linear group of the type CₙF₂ₙ₊₁, wherein n is between 3 and 10 and is preferably 5, 6 or 7.

6. The method according to one of the preceding claims, **characterised in that** the functionalised monomer further comprises a thioether.

7. The method according to claim 6, **characterised in that** the sulfur-bonded organyl residue of the thioether carries the or a further crosslinkable group, wherein the further crosslinkable group can be a crosslinkable ethylenic functionality or a non-ethylenic crosslinkable group, for example an isocyanate group or an epoxide group.

8. The method according to claim 6, **characterised in that** the functionalised monomer has a further group that is substituted at the organyl residue of the organyl sulfide group or that represents the sulfur-bonded organyl residue of the thioether, and preferably represents a fluorinated, anionic and/or crosslinkable group.

9. The method according to claim 6, **characterised in that** the sulfur-bonded organyl residue of the thioether carries the anion corresponding to the cationic group, wherein the anion can be a sulfate group, a sulfonate group, a phosphonate group, a phosphate group, a carbonate group, a carbamate group, a triflate group or a carboxylate group, in particular a sulfonate group, that is substituted at the organyl residue.

10. The method according to one of the preceding claims, **characterised in that** at least some of the anions are not covalently bonded to the copolymer, wherein it is preferably provided that the free anion is chloride, iodide, bromide, aryl sulfonate, alkyl sulfonate, alkyl sulfate, sulfate, aryl phosphonate, alkyl phosphonate, monoalkyl phosphate, dialkyl phosphate, hydrogen phosphate, phosphate, hexafluorophosphate, hydrogen carbonate, carbonate, carbamate, alkyl carbonate, trifluoromethanesulfonate, bis(trifluoromethane)sulfonamide, nonaflate or carboxylate.

11. The method according to one of the preceding claims, **characterised in that** at least some of the anions are covalently bonded to the functionalised monomer, wherein these are for example an organyl-bonded sulfate group, sulfonate group, phosphonate group, phosphate group, carbonate group, carbamate group, triflate group or carboxylate group, in particular a sulfonate group.

12. The method according to one of the preceding claims, **characterised in that** at least some of the anions are a halide and preferably iodide, wherein it is more preferably provided that the composition further comprises a haloalkane, wherein the haloalkane preferably carries a fluorinated group and wherein the haloalkane is preferably a perfluorohaloalkane and more preferably 1-bromoperfluorooctane or 1-iodoperfluorohexane.

13. The method according to one of the preceding claims, **characterised in that** the composition has additional monomers that have at least one crosslinkable group but do not further have both a cationic group and a fluorinated group.

14. A composition according to one of the preceding claims, **characterised in that** the composition further comprises an initiator, preferably a photoinitiator and more preferably a free-radical photoinitiator, and/or **in that** the composition further has an ionic additive and preferably an ionic solvent that preferably comprises cationic compounds with a fluorinated group.

15. A coated article,
**characterised in that**
it has been manufactured by a method according to one of the preceding claims.

## Revendications

1. Procédé de fabrication d'un article revêtu, dans lequel la surface de l'article est mouillée avec une composition réticulable et la composition réticulable est ensuite réticulée en un revêtement, dans lequel la composition réticulable comprend des monomères fonctionnalisés, qui présentent un groupe réticulable, un groupe cationique et un groupe fluoré, dans lequel la composition comprend des anions correspondants aux groupes cationiques des monomères fonctionnalisés, dans lequel le groupe cationique est un groupe cyclique N-substitué et en particulier hétéroaromatique, qui comprend un noyau à 5 atomes et/ou au moins deux hétéroatomes, et dans lequel est disposé entre le groupe cationique et le groupe fluoré un espaceur, qui est un groupe organyle non chargé et non fluoré et de préférence est un groupe alkylène.

2. Procédé selon la revendication 1, **caractérisé en ce que** le groupe cationique est un groupe imidazolium N,N-disubstitué.

3. Procédé selon l'une quelconque des revendications précédentes, **caractérisé en ce que** le groupe réticulable comprend une fonctionnalité éthylénique réticulable, dans lequel il s'agit de préférence d'un groupe vinyle substitué ou non substitué.

4. Procédé selon l'une quelconque des revendications précédentes, **caractérisé en ce que** l'espaceur est un groupe alkylène de préférence linéaire avec 1 à 10, de préférence 1 à 5 et de manière davantage préférée 2 à 3 atomes de carbone.

5. Procédé selon l'une quelconque des revendications précédentes, **caractérisé en ce que** le groupe fluoré est un groupe hydrocarbure totalement fluoré, de préférence un groupe totalement fluoré et éventuellement linéaire du type CₙF₂ₙ₊₁, dans lequel n est compris entre 3 et 10 et de préférence est 5, 6 ou 7.

6. Procédé selon l'une quelconque des revendications précédentes, **caractérisé en ce que** le monomère fonctionnalisé comprend en outre un thioéther.

7. Procédé selon la revendication 6, **caractérisé en ce que** le radical organyle, lié à du soufre, du thioéther supporte le ou un autre groupe réticulable, dans lequel l'autre groupe réticulable peut être une fonctionnalité éthylénique réticulable ou un groupe réticulable non éthylénique, par exemple un groupe isocyanate ou un groupe époxyde.

8. Procédé selon la revendication 6, **caractérisé en ce que** le monomère fonctionnalisé présente un autre groupe, qui est substitué au niveau du radical organyle du groupe sulfure organyle ou qui constitue le radical organyle, lié à du soufre, du thioéther, et constitue de préférence un groupe anionique fluoré et/ou réticulable.

9. Procédé selon la revendication 6, **caractérisé en ce que** le radical organyle, lié à du soufre, du thioéther supporte l'anion correspondant au groupe cationique, dans lequel l'anion peut être un groupe sulfate, sulfonate, phosphonate, phosphate, carbonate, carbamate, triflate ou carboxylate substitué au niveau du radical organyle, en particulier un groupe sulfonate.

10. Procédé selon l'une quelconque des revendications précédentes, **caractérisé en ce qu'**au moins une partie des anions sont liés de manière non covalente au copolymère, dans lequel il est prévu de préférence que l'anion libre soit du chlorure, de l'iodure, du bromure, de l'arylsulfonate, du sulfonate d'alkyle, du sulfate d'alkyle, du sulfate, de l'arylphosphonate, l'alkylphosphonate, du phosphate de monoalkyle, du phospate de dialkyle, du phosphate d'hydrogène, du phosphate, de l'hexafluorophosphate, du carbonate d'hydrogène, du carbonate, du carbamate, du carbonate d'alkyle, du sulfonate de trifluorométhane, du sulfonamide de bis(trifluorométhane), du nonaflate ou du carboxylate.

11. Procédé selon l'une quelconque des revendications précédentes, **caractérisé en ce qu'**au moins une partie des anions est liée de manière covalente au monomère fonctionnalisé, dans lequel il s'agit par exemple d'un groupe sulfate, sulfonate, phosphonate, phosphate, carbonate, carbamate, triflate ou carboxylate lié à de l'organyle, en particulier d'un groupe sulfonate.

12. Procédé selon l'une quelconque des revendications précédentes, **caractérisé en ce qu'**au moins une partie des anions est un halogénure et de préférence de l'iodure, dans lequel il est prévu de manière davantage préférée que la composition comprenne en outre un haloalcane, dans lequel l'haloalcane supporte de préférence un groupe fluoré et dans lequel l'haloalcane est de préférence un perfluorohaloalcane et de manière davantage préférée un 1-bromoperfluorooctane ou un 1-iodoperfluorohexane.

13. Procédé selon l'une quelconque des revendications précédentes, **caractérisé en ce que** la composition présente des monomères supplémentaires, qui présentent au moins un groupe réticulable, ne présentent toutefois pas en outre un groupe cationique et un groupe fluoré.

14. Composition selon l'une quelconque des revendications précédentes, **caractérisée en ce que** la composition comprend en outre un initiateur, de préférence un photo-initiateur et de manière davantage préférée un photo-initiateur radicalaire, et/ou que la composition présente en outre un additif ionique et de préférence un solvant ionique, qui comprend de préférence des composés cationiques avec un groupe fluoré.

15. Article revêtu,
**caractérisé en ce**
**qu'**il a été fabriqué par un procédé selon l'une quelconque des revendications précédentes.
